# EUROPÄISCHE PATENTSCHRIFT

(11) **EP 3 979 867 B1**
(45) Veröffentlichungstag und Bekanntmachung des Hinweises auf die Patenterteilung: **19.02.2025**
(21) Anmeldenummer: 20785916.6
(22) Anmeldetag: 16.09.2020
(51) Int. Cl.: A41F 1/00, A44B 17/00, A45C 13/10

(54) **VERBINDUNGSVORRICHTUNG ZUM LÖSBAREN VERBINDEN ZWEIER BAUGRUPPE**
CONNECTION DEVICE FOR RELEASABLY CONNECTING TWO ASSEMBLIES
DISPOSITIF DE RACCORDEMENT POUR RELIER DE MANIÈRE AMOVIBLE DEUX ENSEMBLES

(30) Priorität: 17.09.2019 DE 102019214141
(43) Veröffentlichungstag der Anmeldung: 13.04.2022
(73) Patentinhaber: Fidlock GmbH, 30659 Hannover (DE)
(72) Erfinder: FIEDLER, Joachim, 30519 Hannover (DE); PABST, Jandra, 30459 Hannover (DE); BOTKUS, Breido, 30175 Hannover (DE)
(74) Vertreter: Maikowski & Ninnemann Patentanwälte Partnerschaft mbB
(86) Internationale Anmeldenummer: PCT/EP2020/075870
(87) Internationale Veröffentlichungsnummer: WO 2021/053017

(56) Entgegenhaltungen:
- EP-A1- 1 264 553
- FR-A- 490 197
- US-A- 3 266 112
- US-A1- 2015 196 955
- US-A1- 2016 307 680

## Beschreibung

Die Erfindung betrifft eine Verbindungsvorrichtung zum lösbaren Verbinden zweier Baugruppen nach dem Oberbegriff des Anspruchs 1.

Eine derartige Verbindungsvorrichtung weist ein erstes Verbindungsteil, das eine Eingriffsöffnung und ein erstes Magnetelement aufweist, und ein zweites Verbindungsteil, das einen Eingriffsabschnitt und ein zweites Magnetelement aufweist, auf. Das erste Verbindungsteil und das zweite Verbindungsteil sind miteinander verbindbar, indem der Eingriffsabschnitt des zweiten Verbindungsteils in eine Eingriffsrichtung mit der Eingriffsöffnung des ersten Verbindungsteils in Eingriff gebracht werden kann, wobei das erste Magnetelement und das zweite Magnetelement beim Verbinden des ersten Verbindungsteils und des zweiten Verbindungsteils magnetisch anziehend zusammenwirken.

Eine derartige Verbindungsvorrichtung kann beispielsweise als Verschluss für ein Kleidungsstück verwendet werden. Zum Schließen werden die Verbindungsteile aneinander angesetzt, sodass der Eingriffsabschnitt des ersten Verbindungsteils in die Eingriffsrichtung in Eingriff mit der Eingriffsöffnung des zweiten Verbindungsteils gelangt, wobei das Ansetzen der Verbindungsteile aneinander magnetisch durch die an den Verbindungsteilen angeordneten Magnetelemente unterstützt wird.

Bei solchen Verbindungsvorrichtungen besteht generell das Bedürfnis nach einer leichten Handhabung, insbesondere zum Öffnen der Verbindungsvorrichtung. Hierbei kann wünschenswert sein, bei übermäßiger Belastung ein Notöffnen zu ermöglichen, sodass beispielsweise bei Kleidungsstücken eine Gefahr durch unsachgemäßen Gebrauch vermieden wird.

Die EP 1 264 553 A1, die den Oberbegriff des Anspruchs 1 offenbart, offenbart eine Befestigungsvorrichtung mit einem Magneten und einem Magnetgehäuse, wobei die Vorrichtung eine an dem Gehäuse ausgebildete magnetische Kupplungsfläche aufweist und die magnetische Kupplungsfläche so angepasst ist, dass sie mit einer anderen magnetischen Kupplungsfläche einer anderen Befestigungsvorrichtung magnetisch in Eingriff kommt. Die magnetische Kupplungsfläche ist mit einer Führungseinrichtung versehen, um die relative Bewegung der magnetischen Kupplungsflächen im Wesentlichen einzuschränken, wenn die Flächen in physischem Kontakt stehen.

Die US 3,266,112 offenbart einen Verschluss, der ein erstes und ein zweites Element aus einem Material umfasst, das die magnetische Polarisierung aufrechterhalten kann, wobei das erste dieser Elemente eine Oberfläche mit einer darin verlaufenden Nut aufweist und das zweite dieser Elemente mit einer von einer Oberfläche nach außen verlaufenden Leiste versehen ist, die so angepasst ist, dass sie mit der Nut zusammenpasst und darin entfernbar aufgenommen werden kann.

Aufgabe der vorliegenden Erfindung ist es, eine Verbindungsvorrichtung zur Verfügung zu stellen, die eine Notöffnungsfunktion bereitstellt.

Die Aufgabe wird durch eine Verbindungsvorrichtung mit den Merkmalen des Anspruchs 1 gelöst.

Demnach weisen die Eingriffsöffnung und/oder der Eingriffsabschnitt in einer durch die Eingriffsrichtung und eine quer zur Eingriffsrichtung erstreckte Querrichtung aufgespannten Querschnittsebene eine sich in die Eingriffsrichtung verjüngende Form auf.

Das erste Verbindungsteil weist eine die Eingriffsöffnung zumindest abschnittsweise begrenzende, erste Kontaktfläche und das zweite Verbindungsteil weist eine den Eingriffsabschnitt zumindest abschnittsweise begrenzende, zweite Kontaktfläche auf, wobei die erste Kontaktfläche und die zweite Kontaktfläche in einer verbundenen Stellung, in der der Eingriffsabschnitt des zweiten Verbindungsteils mit der Eingriffsöffnung des ersten Verbindungsteils in Eingriff ist, einander zugewandt sind. Die verjüngende Form an der Eingriffsöffnung und/oder dem Eingriffsabschnitt kann hierbei dadurch erreicht werden, dass zumindest eine der Kontaktflächen gekrümmt ist oder schräg zu der Eingriffsrichtung erstreckt ist.

Indem die Eingriffsöffnung und/oder der Eingriffsabschnitt in die Eingriffsrichtung mit einer verjüngenden Form ausgebildet sind, kann erreicht werden, dass bei einer Belastung quer zur Eingriffsrichtung ein Öffnen der Verbindungsvorrichtung bewirkt werden kann. So kann bei einer Belastung quer zur Eingriffsrichtung, die eine durch die Dimensionierung der Magnetelemente und die Ausgestaltung der Eingriffsöffnung und des Eingriffsabschnitts definierte Lösekraft übersteigt, der Eingriffsabschnitt auf eine an der Eingriffsöffnung geformte Kontaktfläche auflaufen, sodass im Sinne einer Kraftumlenkung ein Trennen der Verbindungsteile entgegen der Eingriffsrichtung voneinander bewirkt wird. Insbesondere können Kontaktflächen an dem Eingriffsabschnitt und der Eingriffsöffnung bei einer Querbelastung so aufeinander auflaufen, dass die Verbindungsteile entgegen der Eingriffsrichtung voneinander getrennt werden, sich dadurch die Magnetkraft zwischen den Verbindungsteilen abschwächt und die Verbindungsteile damit außer Eingriff voneinander gelangen.

Zumindest eine der Kontaktflächen kann schräg zur Eingriffsrichtung gestellt sein und hierbei zum Beispiel gradlinig in der durch die Eingriffsrichtung und die Querrichtung aufgespannten Querschnittsebene erstreckt sein. Alternativ kann die jeweilige Kontaktfläche auch gekrümmt in der Querschnittsebene erstreckt sein, sodass die Eingriffsöffnung und/oder der Eingriffsabschnitt beispielsweise eine kugelige Form aufweisen.

In einer Ausgestaltung sind die erste Kontaktfläche und die zweite Kontaktfläche jeweils gekrümmt oder unter einem schrägen Winkel zur Eingriffsrichtung erstreckt.

Denkbar ist jedoch auch, dass die erste Kontaktfläche und die zweite Kontaktfläche unterschiedlich geformt sind. Beispielsweise ist in einer Ausgestaltung nur eine der Kontaktflächen gekrümmt oder schräg zur Eingriffsrichtung erstreckt, während die andere Kontaktfläche sich entlang der Eingriffsrichtung erstreckt.

Die erste Kontaktfläche ist umlaufend um die Eingriffsöffnung des ersten Verbindungsteils erstreckt. Die erste Kontaktfläche bildet somit eine die Eingriffsöffnung umfänglich um die Eingriffsrichtung umgebende Umfangsfläche aus. Zusätzlich ist die zweite Kontaktfläche umlaufend um den Eingriffsabschnitt des zweiten Verbindungsteils erstreckt, sodass die zweite Kontaktfläche eine den Eingriffsabschnitt umfänglich um die Eingriffsrichtung umgebende Mantelfläche ausbildet. Hierdurch kann bewirkt werden, dass in unterschiedlichen Belastungsrichtungen quer zur Eingriffsrichtung, beispielsweise in jeder Richtung in einer quer zur Eingriffsrichtung erstreckten Ebene, eine Notöffnung durch Auflaufen der Kontaktflächen aufeinander ermöglicht werden kann.

Die erste Kontaktfläche der Eingriffsöffnung und die zweite Kontaktfläche des Eingriffsabschnitts können eine gleiche (aber komplementäre) Form aufweisen, indem die erste Kontaktfläche und die zweite Kontaktfläche in gleicher Weise gekrümmt oder unter einem gleichen schrägen Winkel zur Eingriffsrichtung erstreckt sind. Bei

Querbelastung können die Kontaktflächen aufeinander auflaufen, sodass dadurch die Verbindungsteile, wenn eine definierte Lösekraft überstiegen wird, entgegen der Eingriffsrichtung voneinander getrennt werden.

In einer Ausgestaltung ist an wenigstens einer der Kontaktflächen zumindest ein Strukturelement mit zumindest einem von einer gekrümmten oder schrägen Erstreckungsrichtung der Kontaktfläche abweichenden Flächenabschnitt angeordnet. Beispielsweise können an einer oder an beiden Kontaktflächen Strukturen nach Art von Noppen, Zähnen, Wellen oder Stufen oder dergleichen angeordnet sein, wobei die jeweilige Kontaktfläche beispielsweise vollständig gewellt oder gestuft ausgebildet sein kann oder nur an einem Teilabschnitt der Kontaktfläche solche Strukturelemente angeordnet sind. Durch das Vorsehen von Strukturelementen an einer oder an beiden Kontaktflächen kann eine Reibung zwischen den Kontaktflächen bei einer Querbelastung eingestellt werden, sodass dadurch die Lösekraft, die durch die Querbelastung zum Lösen der Verbindungsteile voneinander überstiegen werden muss, definiert eingestellt werden kann.

Zusätzlich oder alternativ kann die Reibung zwischen den Kontaktflächen durch das Material und dessen Oberflächenbeschaffenheit (Textur), zum Beispiel eine Aufrauhung, eingestellt werden.

Beispielsweise können die erste Kontaktfläche und/oder die zweite Kontaktfläche zumindest eine Stufe aufweisen und somit ganz oder teilweise gestuft ausgebildet sein. Eine jede Stufe kann hierbei beispielsweise - in der durch die Eingriffsrichtung und die Querrichtung aufgespannten Querschnittsebene - durch eine entlang oder schräg zur Eingriffsrichtung erstreckte Stirnfläche und eine quer oder schräg zur Eingriffsrichtung erstreckte Podestfläche ausgebildet sein, wobei bei gestufter Ausbildung der jeweiligen Kontaktfläche an eine Stirnfläche jeweils eine Podestfläche und an die Podestfläche wiederum eine Stirnfläche anschließt.

Ein Übergang zwischen einer Stirnfläche und einer Podestfläche kann hierbei abgerundet sein.

Denkbar ist auch, Stirnflächen der Kontaktflächen bei gestufter Ausbildung so auszurichten, dass sich ein Hinterschnitt ergibt, bei einer Querbelastung die Kontaktflächen somit über Hinterschnitte aneinander anliegen.

In einer Ausgestaltung ist die Eingriffsöffnung durch einen Boden begrenzt. Das erste Magnetelement des ersten Verbindungsteils kann hierbei im Bereich des Bodens angeordnet sein, beispielsweise indem das erste Magnetelement zentral zur Eingriffsöffnung an einem den Boden ausbildenden Gehäuseteil aufgenommen ist. Die erste Kontaktfläche des ersten Verbindungsteils kann sich hierbei, betrachtet entgegen der Eingriffsrichtung, im Wesentlichen oberhalb des Bodens erstrecken, sodass das erste Magnetelement bündig mit dem Boden oder im Boden eingebettet ist und die Kontaktfläche sich entgegen der Eingriffsrichtung vom Boden erhebt.

In einer Ausgestaltung ist innerhalb der Eingriffsöffnung des ersten Verbindungsteils ein entgegen der Eingriffsrichtung weisender, erhabener Abschnitt angeordnet, der bei mit der Eingriffsöffnung in Eingriff stehendem Eingriffsabschnitt in eine Aufnahmeöffnung an dem Eingriffsabschnitt des zweiten Verbindungsteils eingreift. Der erhabene Abschnitt kann beispielsweise entgegen der Eingriffsrichtung von dem Boden der Eingriffsöffnung vorstehen und greift bei miteinander verbundenen Verbindungsteilen in eine zugeordnete Aufnahmeöffnung am Eingriffsabschnitt des zweiten Verbindungsteils ein. Durch einen solchen, erhabenen Abschnitt kann die Lösekraft, die durch eine Querbelastung zum Zwecke einer Notöffnung überstiegen werden muss, zusätzlich beeinflusst werden, indem der Querhalt der Verbindungsteile in verbundener Stellung vergrößert ist.

An dem erhabenen Abschnitt und der Aufnahmeöffnung können Auflaufflächen gebildet sein, die bei Querbelastung aufeinander auflaufen, sodass die Verbindungsteile bei einer die Lösekraft übersteigenden Querbelastung selbsttätig voneinander lösbar sind, um auf diese Weise eine Notöffnungsfunktion bereitzustellen.

In einer Ausgestaltung sind die Eingriffsöffnung und/oder der Eingriffsabschnitt im Querschnitt quer zur Eingriffsrichtung rund oder mehreckig ausgebildet. Beispielsweise können die Eingriffsöffnung und der Eingriffsabschnitt eine kreisrunde Form aufweisen und somit rotationssymmetrisch um die Eingriffsrichtung ausgebildet sein. Alternativ können die Eingriffsöffnung und der Eingriffsabschnitt zum Beispiel jeweils dreieckig, viereckig, fünfeckig oder sechseckig ausgebildet sein, wobei die Eingriffsöffnung und der Eingriffsabschnitt im Querschnitt quer zur Eingriffsrichtung vorzugsweise eine regelmäßige Form mit (bei mehreckiger Ausgestaltung) gleichförmigen Kanten aufweisen.

Das erste Verbindungsteil weist einen weiteren Eingriffsabschnitt und/oder das zweite Verbindungsteil weist eine weitere Eingriffsöffnung auf.

Das erste Verbindungsteil und das zweite Verbindungsteil können somit mit weiteren Verbindungsteilen in gestapelter Weise in Verbindung gebracht werden, indem ein weiteres Verbindungsteil durch Eingriff des weiteren Eingriffsabschnitts des ersten Verbindungsteils in eine Eingriffsöffnung des weiteren Verbindungsteils mit dem ersten Verbindungsteil verbunden wird oder ein weiteres Verbindungsteil durch Eingriff in die weitere Eingriffsöffnung des zweiten Verbindungsteils mit dem zweiten Verbindungsteil verbunden wird.

Vorzugsweise sind das erste Verbindungsteil und das zweite Verbindungsteil, zumindest im Bereich des Eingriffsabschnitts und der Eingriffsöffnung, als Gleichteile ausgebildet, sodass ein jedes Verbindungsteil in beliebiger Weise mit dem jeweils anderen Verbindungsteil verbunden werden kann, indem ein Verbindungsteil unterhalb oder oberhalb des anderen Verbindungsteils angeordnet werden kann.

In einer Ausgestaltung weist das erste Verbindungsteil zwei erste Gehäuseteile auf, die das erste Magnetelement zwischen sich aufnehmen. Die Gehäuseteile können beispielsweise miteinander verrastet werden, um das erste Verbindungsteil auszubilden, wobei zwischen den Gehäuseteilen eine Aufnahmeöffnung zur Aufnahme des ersten Magnetelements gebildet ist und somit in montierter Stellung das erste Magnetelement zu den Gehäuseteilen fixiert ist. Zwischen den Gehäuseteilen kann eine zugeordnete, erste Baugruppe, beispielsweise ein textiler Stoff, aufgenommen werden, sodass das erste Verbindungsteil über die Gehäuseteile mit der Baugruppe verbunden werden kann.

Zusätzlich oder alternativ kann das zweite Verbindungsteil zwei zweite Gehäuseteile aufweisen, die das zweite Magnetelement zwischen sich aufnehmen. Wiederum können die zweiten Gehäuseteile miteinander verrastet werden und bilden gemeinsam eine Aufnahmeöffnung für das zweite Magnetelement aus. Zwischen den zweiten Gehäuseteilen kann eine zugeordnete, zweite Baugruppe, beispielsweise ein textiler Stoff, aufgenommen werden, sodass das erste Verbindungsteil über die Gehäuseteile mit der Baugruppe verbunden werden kann.

Die Gehäuseteile können hierbei jeweils derart miteinander zu verbinden sein, dass sie das jeweils zugeordnete Magnetelement dichtend zwischen sich aufnehmen. Über Rastabschnitte kann beispielsweise eine Verbindung geschaffen werden, die das Magnetelement feuchtigkeitsdicht einschließt und somit vor Schmutz und Feuchtigkeit schützt.

Alternativ ist auch denkbar, das erste Verbindungsteil und/oder das zweite Verbindungsteil einteilig auszubilden, wobei im Bereich eines Randabschnitts des ersten Verbindungsteils oder des zweiten Verbindungsteils ein zusätzliches Befestigungselement zur Befestigung des Verbindungsteils an einer jeweils zugeordneten Baugruppe angeordnet sein kann.

In einer Ausgestaltung weist das erste Verbindungsteil einen um die Eingriffsöffnung herum erstreckten, ersten Randabschnitt zur Verbindung mit einer ersten Baugruppe auf. Zusätzlich oder alternativ kann das zweite Verbindungsteil einen um den Eingriffsabschnitt herum erstreckten, zweiten Randabschnitt zur Verbindung mit einer zweiten Baugruppe aufweisen. Über solche Randabschnitt kann das jeweilige Verbindungsteil an der zugeordnete Baugruppe zum Beispiel in mechanischer Weise oder auf chemische Weise, beispielsweise durch Nähen, Kleben, Schweißen oder Nieten, befestigt werden.

Ist das jeweilige Verbindungsteil durch zwei Gehäuseteile zusammengesetzt, so können beide Gehäuseteile jeweils einen Randabschnitt aufweisen, wobei die zugeordnete Baugruppe zwischen den Randabschnitten aufgenommen werden kann und über beide Randabschnitte zum Beispiel durch Kleben oder Nieten mit dem Verbindungsteil verbunden werden kann.

In einer Ausgestaltung weist das erste Verbindungsteil einen ersten Anbindungsabschnitt zur Verbindung mit einer ersten Baugruppe auf, während das zweite Verbindungsteil einen zweiten Anbindungsabschnitt zur Verbindung mit einer zweiten Baugruppe aufweist. Der erste Anbindungsabschnitt und der zweite Anbindungsabschnitt können hierbei entlang einer gemeinsamen, quer zur Eingriffsrichtung erstreckten Ebene erstreckt sein. Dies kann bewirken, dass bei einer Belastung der Baugruppen quer zur Eingriffsrichtung relativ zueinander eine Belastungskraft in der gemeinsamen Ebene zwischen den Verbindungsteilen wirkt, sodass bei einer Querbelastung eine definierte Krafteinleitung und ein definiertes Lösen durch Auflaufen des Eingriffsabschnitts und der Eingriffsöffnung aufeinander erfolgt.

Das erste Magnetelement und das zweite Magnetelement können beispielsweise jeweils durch einen Permanentmagneten oder durch eine Anordnung von mehreren Permanentmagneten ausgebildet sein. Das erste Magnetelement und das zweite Magnetelement weisen bei Ansetzen der Verbindungsteile aneinander mit einem oder mit mehreren ungleichnamigen Polen aufeinander zu, sodass eine magnetische Anziehungskraft zwischen den Magnetelementen besteht und somit das Ansetzen der Verbindungsteile aneinander magnetisch unterstützt wird.

Denkbar ist jedoch auch, dass eins der Magnetelemente an einem der Verbindungsteile als Permanentmagnet oder durch eine Anordnung von Permanentmagneten und das Magnetelement an dem anderen der Verbindungsteile als magnetischer Anker, zum Beispiel aus einem ferromagnetischen Material, gefertigt ist, der magnetisch anziehend mit dem Permanentmagneten oder der Anordnung von Permanentmagneten wechselwirkt.

In einer Ausgestaltung halten die Magnetelemente die Verbindungsteile in der verbundenen Stellung aneinander. Die Verbindungsteile sind hierbei beispielsweise ausschließlich über die Magnetelemente aneinander gehalten, ohne dass eine zusätzliche mechanische Verrastung zwischen den Verbindungsteilen besteht.

Eine Verbindungsvorrichtung der beschriebenen Art ist in vielfältiger Weise verwendbar. Insbesondere kann eine Verbindungsvorrichtung bei all solchen Gegenständen zum Einsatz kommen, bei denen eine Notauslösung bei einer Querbelastung quer zur Eingriffsrichtung gewünscht ist.

Eine Verbindungsvorrichtung kann beispielsweise bei Kleidungsstücken, insbesondere für Kinder oder ältere oder beeinträchtigte Personen, zum Einsatz kommen. Beispielsweise kann eine Verbindungsvorrichtung der beschriebenen Art bei Wendebekleidung zum Einsatz kommen, zum Beispiel Wendejacken, die von innen nach außen gewendet werden können.

Eine Verbindungsvorrichtung der beschriebenen Art kann allgemein bei Schnur-Textil-oder Bandanwendungen mit Strangulationsgefahr und einer dadurch bedingten Notwendigkeit für eine Notöffnung verwendet werden, wie zum Beispiel bei Trillerpfeifen, Lätzchen, Anschnall- und Haltegeschirren, Halsbändern, Anschnallsystemen, Helmen, Mützen und Kapuzen an Kleidungsstücken, Befestigungssystemen für Wandplatten, Ordnungssystemen, Arbeitsbekleidung und Haltesystemen, Accessoires- und Zubehörbefestigung, Halstüchern und Schals, Kabel- und Bandorganisation, Schlafsäcken, Schuhen, Taschen und Rucksäcken oder dergleichen.

Mehrere Verbindungsvorrichtungen können hierbei in Kombination verwendet werden, um zum Beispiel bei Kleidung, zum Beispiel Jacken, ein Schließen entlang einer Schließlinie zu ermöglichen.

Der der Erfindung zugrunde liegende Gedanke soll nachfolgend anhand der in den Figuren dargestellten Ausführungsbeispiele näher erläutert werden. Es zeigen:
- Fig. 1A: eine Ansicht eines Ausführungsbeispiels einer Verbindungsvorrichtung, umfassend ein erstes Verbindungsteil und ein zweites Verbindungsteil, in einer aneinander angesetzten Stellung;
- Fig. 1B: eine Draufsicht auf die Anordnung gemäß Fig. 1A;
- Fig. 1C: eine Schnittansicht entlang der Linie A-A gemäß Fig. 1B;
- Fig. 1D: eine ausschnittsweise vergrößerte Ansicht der Anordnung gemäß Fig. 1C;
- Fig. 2A: eine Explosionsansicht eines anderen Ausführungsbeispiels einer Verbindungsvorrichtung;
- Fig. 2B: eine Draufsicht auf die Anordnung gemäß Fig. 2A;
- Fig. 2C: eine Schnittansicht entlang der Linie B-B gemäß Fig. 2B;
- Fig. 2D: eine ausschnittsweise vergrößerte Ansicht im Ausschnitt C gemäß Fig. 2C;
- Fig. 2E: eine vergrößerte Ansicht im Ausschnitt F gemäß Fig. 2C;
- Fig. 3A: die Verbindungsvorrichtung gemäß Fig. 2A, in einer verbundenen Stellung der Verbindungsteile;
- Fig. 3B: eine Draufsicht auf die Anordnung gemäß Fig. 3A;
- Fig. 3C: eine Schnittansicht entlang der Linie A-A gemäß Fig. 3B;
- Fig. 3D: eine ausschnittsweise vergrößerte Ansicht der Anordnung gemäß Fig. 3C;
- Fig. 4A: die Verbindungsvorrichtung gemäß Fig. 3A, in einer getrennten Stellung der Verbindungsteile;
- Fig. 4B: eine Draufsicht auf die Anordnung gemäß Fig. 4A;
- Fig. 4C: eine Schnittansicht entlang der Linie E-E gemäß Fig. 4B;
- Fig. 4D: eine vergrößerte Ansicht im Ausschnitt B gemäß Fig. 4C;
- Fig. 5A: eine Ansicht eines anderen Ausführungsbeispiels einer Verbindungsvorrichtung;
- Fig. 5B: eine Draufsicht auf die Anordnung gemäß Fig. 5A;
- Fig. 5C: eine Schnittansicht entlang der Linie C-C gemäß Fig. 5B;
- Fig. 5D: eine ausschnittsweise vergrößerte Ansicht der Anordnung gemäß Fig. 5C;
- Fig. 6A: eine Ansicht eines wiederum anderen Ausführungsbeispiels einer Verbindungsvorrichtung;
- Fig. 6B: eine Draufsicht auf die Anordnung gemäß Fig. 6A;
- Fig. 6C: eine Schnittansicht entlang der Linie B-B gemäß Fig. 6B;
- Fig. 6D: eine ausschnittsweise vergrößerte Ansicht der Anordnung gemäß Fig. 6C;
- Fig. 7A: eine Ansicht eines wiederum anderen Ausführungsbeispiels einer Verbindungsvorrichtung;
- Fig. 7B: eine Draufsicht auf die Anordnung gemäß Fig. 7A;
- Fig. 7C: eine Schnittansicht entlang der Linie A-A gemäß Fig. 7B;
- Fig. 7D: eine ausschnittsweise vergrößerte Ansicht der Anordnung gemäß Fig. 7C;
- Fig. 8A: eine Ansicht eines wiederum anderen Ausführungsbeispiels einer Verbindungsvorrichtung;
- Fig. 8B: eine Draufsicht auf die Anordnung gemäß Fig. 8A;
- Fig. 8C: eine Schnittansicht entlang der Linie E-E gemäß Fig. 8B;
- Fig. 8D: eine ausschnittsweise vergrößerte Ansicht der Anordnung gemäß Fig. 8C;
- Fig. 9A: eine Ansicht eines wiederum anderen Ausführungsbeispiels einer Verbindungsvorrichtung;
- Fig. 9B: eine Draufsicht auf die Anordnung gemäß Fig. 9A;
- Fig. 9C: eine Schnittansicht entlang der Linie G-G gemäß Fig. 9B;
- Fig. 9D: eine ausschnittsweise vergrößerte Ansicht der Anordnung gemäß Fig. 9C;
- Fig. 10A: eine Ansicht eines wiederum anderen Ausführungsbeispiels einer Verbindungsvorrichtung;
- Fig. 10B: eine Draufsicht auf die Anordnung gemäß Fig. 10A;
- Fig. 10C: eine Schnittansicht entlang der Linie F-F gemäß Fig. 10B;
- Fig. 10D: eine ausschnittsweise vergrößerte Ansicht der Anordnung gemäß Fig. 10C;
- Fig. 11A: eine Ansicht eines wiederum anderen Ausführungsbeispiels einer Verbindungsvorrichtung;
- Fig. 11B: eine Draufsicht auf die Anordnung gemäß Fig. 11A;
- Fig. 11C: eine Schnittansicht entlang der Linie C-C gemäß Fig. 11B;
- Fig. 11D: eine ausschnittsweise vergrößerte Ansicht der Anordnung gemäß Fig. 11C;
- Fig. 12A: eine Ansicht eines wiederum anderen Ausführungsbeispiels einer Verbindungsvorrichtung;
- Fig. 12B: eine Draufsicht auf die Anordnung gemäß Fig. 12A;
- Fig. 12C: eine Schnittansicht entlang der Linie D-D gemäß Fig. 12B;
- Fig. 12D: eine ausschnittsweise vergrößerte Darstellung der Ansicht gemäß Fig. 12C;
- Fig. 13A: eine Ansicht eines wiederum anderen Ausführungsbeispiels einer Verbindungsvorrichtung;
- Fig. 13B: eine Draufsicht auf die Anordnung gemäß Fig. 13A;
- Fig. 13C: eine Schnittansicht entlang der Linie A-A gemäß Fig. 13B;
- Fig. 13D: eine ausschnittsweise vergrößerte Darstellung der Ansicht gemäß Fig. 13C;
- Fig. 14A: eine Ansicht eines wiederum anderen Ausführungsbeispiels einer Verbindungsvorrichtung;
- Fig. 14B: eine Seitenansicht der Anordnung gemäß Fig. 14A;
- Fig. 14C: eine Draufsicht auf die Anordnung gemäß Fig. 14A;
- Fig. 14D: eine Schnittansicht entlang der Linie D-D gemäß Fig. 14C;
- Fig. 15A: eine Ansicht eines wiederum anderen Ausführungsbeispiels einer Verbindungsvorrichtung;
- Fig. 15B: eine Seitenansicht der Anordnung gemäß Fig. 15A;
- Fig. 15C: eine Draufsicht auf die Anordnung gemäß Fig. 15A;
- Fig. 15D: eine Schnittansicht entlang der Linie C-C gemäß Fig. 15C;
- Fig. 16A: eine Ansicht eines wiederum anderen Ausführungsbeispiels einer Verbindungsvorrichtung;
- Fig. 16B: eine Seitenansicht der Anordnung gemäß Fig. 16A;
- Fig. 16C: eine Draufsicht auf die Anordnung gemäß Fig. 16A;
- Fig. 16D: eine Schnittansicht entlang der Linie B-B gemäß Fig. 16C;
- Fig. 17A: eine Ansicht eines wiederum anderen Ausführungsbeispiels einer Verbindungsvorrichtung;
- Fig. 17B: eine Seitenansicht der Anordnung gemäß Fig. 17A;
- Fig. 17C: eine Draufsicht auf die Anordnung gemäß Fig. 17A;
- Fig. 17D: eine Schnittansicht entlang der Linie A-A gemäß Fig. 17C;
- Fig. 18A: eine Ansicht eines weiteren Ausführungsbeispiels einer Verbindungsvorrichtung, an zugeordneten Baugruppen;
- Fig. 18B: eine Draufsicht auf die Anordnung gemäß Fig. 18A;
- Fig. 18C: eine Schnittansicht entlang der Linie A-A gemäß Fig. 18B;
- Fig. 18D: eine ausschnittsweise vergrößerte Ansicht der Anordnung gemäß Fig. 18C;
- Fig. 19: eine Ansicht eines weiteren Ausführungsbeispiels einer Verbindungsvorrichtung; und
- Fig. 20: eine Ansicht eines wiederum anderen Ausführungsbeispiels einer Verbindungsvorrichtung.

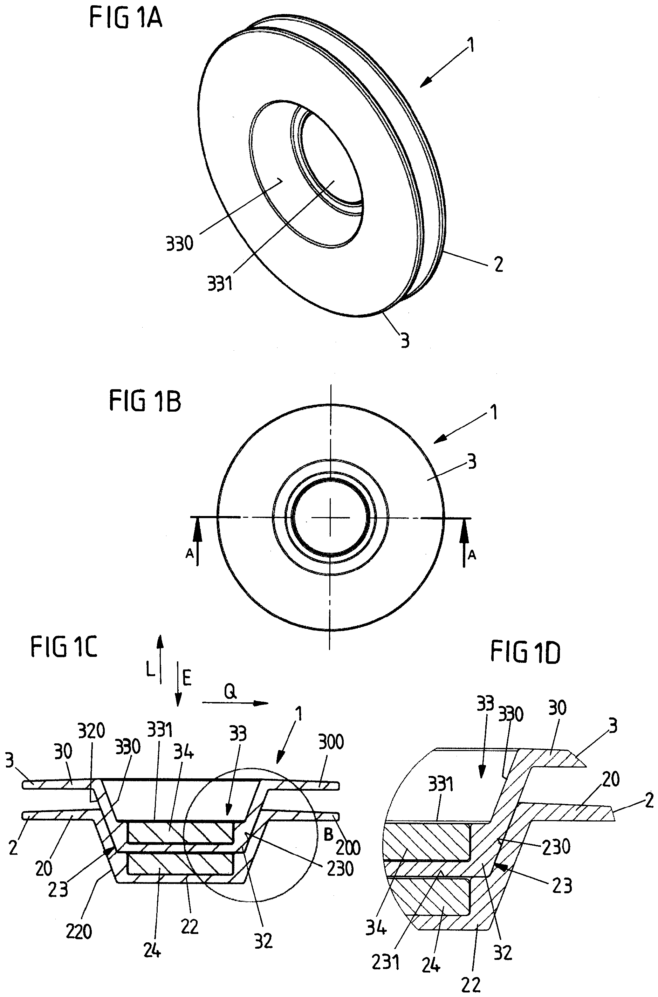

Fig. 1A bis 1D zeigen ein erstes Ausführungsbeispiel einer Verbindungsvorrichtung 1, die ein erstes Verbindungsteil 2 und ein zweites Verbindungsteil 3 aufweist. Die Verbindungsteile 2, 3, die in Fig. 1A bis 1D in einer verbundenen Stellung dargestellt sind, können entlang einer Eingriffsrichtung E aneinander angesetzt und in eine der Eingriffsrichtung E entgegengesetzte Löserichtung L wieder voneinander gelöst werden.

Ein jedes Verbindungsteil 2, 3 weist ein Gehäuseteil 20, 30 auf, das einen Randabschnitt 200, 300 ausbildet, über den das jeweilige Verbindungsteil 2, 3 mit einer zugeordneten Baugruppe, zum Beispiel einem Kleidungsstück, verbunden werden kann. Die Verbindungsteile 2, 3 sind bei dem dargestellten Ausführungsbeispiel rotationssymmetrisch ausgebildet und als Gleichteile gefertigt, sodass die Verbindungsteile 2, 3 in beliebiger Reihenfolge aneinander angesetzt werden können. Insbesondere kann das Verbindungsteil 3 auch in Eingriffsrichtung E unterhalb des Verbindungsteils 2 angeordnet sein.

Ein jedes Verbindungsteil 2, 3 weist bei dem dargestellten Ausführungsbeispiel einen Eingriffsabschnitt 22, 32 auf, der zapfenartig von dem Randabschnitt 200, 300 in Richtung der Eingriffsrichtung E vorsteht. Im Inneren eines jeden Eingriffsabschnitts 22, 32 ist hierbei eine Eingriffsöffnung 23, 33 geformt.

Sowohl der Eingriffsabschnitt 22, 32 als auch die Eingriffsöffnung 23, 33 verjüngen sich hierbei in die Eingriffsrichtung E, betrachtet in der in Fig. 1C dargestellten, durch die Eingriffsrichtung E und eine (einer Radialrichtung entsprechende) Querrichtung Q aufgespannten Querschnittsebene.

Zur Verbindung der Verbindungsteile 2, 3 miteinander kann beispielsweise das Verbindungsteil 3 mit dem Eingriffsabschnitt 32 in die Eingriffsöffnung 23 des Verbindungsteils 2 eingesetzt werden, wie dies in Fig. 1A in Zusammenschau mit Fig. 1C und 1D dargestellt ist. In der verbundenen Stellung greift der Eingriffsabschnitt 32 des Verbindungsteils 3 in die Eingriffsöffnung 23 des Verbindungsteils 2 ein, wie dies beispielsweise aus Fig. 1C ersichtlich ist.

Jedes Verbindungsteil 2, 3 weist ein Magnetelement 24, 34 auf, das im Bereich des Bodens 231, 331 der Eingriffsöffnung 23, 33 des jeweils zugeordneten Verbindungsteils 2, 3 angeordnet ist. Die Magnetelemente 24, 34 wirken bei Ansetzen der Verbindungsteile 2, 3 in die Eingriffsrichtung E magnetisch anziehend zusammen, sodass das Ansetzen der Verbindungseite 2, 3 aneinander magnetisch unterstützt wird und vorzugsweise selbsttätig erfolgt, wenn die Verbindungsteile 2, 3 einander angenähert werden.

In der verbundenen Stellung sind die Verbindungsteile 2, 3 über die Magnetelemente 24, 34 magnetisch aneinander gehalten. Eine zusätzliche Verrastung besteht hierbei nicht.

Die Magnetelemente 24, 34 können jeweils durch einen Permanentmagneten oder durch eine Anordnung von Permanentmagneten ausgebildet sein. Alternativ kann eins der Magnetelemente 24, 34 durch einen Permanentmagneten oder eine Anordnung von Permanentmagneten gebildet sein, während das andere der Magnetelemente 34, 24 durch einen magnetischen Anker, also ein passives Element, das jedoch magnetisch mit dem Permanentmagneten oder der Anordnung von Permanentmagneten zusammenwirkt, gebildet ist.

Dadurch, dass sich die Eingriffsabschnitte 22, 32 und die Eingriffsöffnungen 23, 33 der Verbindungsteile 2, 3 in die Eingriffsrichtung E verjüngen, wird eine Notöffnung der durch die Verbindungsteile 2, 3 geschaffenen Verbindungsvorrichtung 1 möglich. So bilden die Eingriffsabschnitte 22, 32 jeweils eine Kontaktfläche 220, 320 aus, die durch eine konische Mantelfläche des jeweiligen Eingriffsabschnitts 22, 32 geformt ist. Komplementär zu den Eingriffsabschnitten 22, 32 sind die Eingriffsöffnungen 23, 33 jeweils durch eine konische Kontaktfläche 230, 330 begrenzt. Die Kontaktflächen 220, 230, 320, 330 erstrecken sich hierbei jeweils umlaufend umfänglich um die Eingriffsrichtung E und sind dabei rotationssymmetrisch zur Eingriffsrichtung E.

Greift das Verbindungsteil 3, wie in Fig. 1C dargestellt, mit dem Eingriffsabschnitt 32 in die Eingriffsöffnung 23 des Verbindungsteils 2 ein, so liegt die konische Kontaktfläche 320 des Eingriffsabschnitts 32 an der komplementären, konischen Kontaktfläche 230 der Eingriffsöffnung 23 des Verbindungsteils 2 an. Kommt es zu einer Belastung entlang einer radialen Querrichtung Q zwischen den Verbindungsteilen 2, 3, so bewirkt die konische Formgebung der Kontaktflächen 230, 320, dass die Kontaktflächen 230, 320 entlang der Querrichtung Q aufeinander auflaufen und somit eine Querkraft umsetzen in eine Kraft in eine der Eingriffsrichtung E entgegengesetzte Löserichtung L, sodass dann, wenn die Querbelastung eine durch die Dimensionierung der Magnetelemente 24, 34 und zudem durch die geometrischen und reibenden Eigenschaften der Verbindungsteile 2, 3 vorgegebene Lösekraft übersteigt, die Verbindungseite 2, 3 im Sinne einer Notöffnung selbsttätig voneinander gelöst werden.

Dadurch, dass die Verbindungsteile 2, 3 als Gleichteile ausgebildet sind, können die Verbindungsteile 2, 3 in beliebiger Reihenfolge aneinander angesetzt werden. So kann das Verbindungsteil 2 mit dem Eingriffsabschnitt 22 auch in die Eingriffsöffnung 33 des Verbindungsteils 3 eingesetzt werden.

Aufgrund der konischen Formgebung der Eingriffsabschnitte 22, 32 und der Eingriffsöffnungen 23, 33 führt eine Querbelastung in beliebiger, radialer Richtung zur Eingriffsrichtung E zu einer Notöffnung, wenn die vorgegebene Lösekraft überstiegen wird.

Bei dem in Fig. 1A bis 1D dargestellten Ausführungsbeispiel ist jedes Verbindungsteil 2, 3 mit einem einzigen Gehäuseteil 20, 30 ausgestaltet, in dem das jeweilige Magnetelement 24, 34 aufgenommen ist.

Bei dem in Fig. 1A bis 1D dargestellten Ausführungsbeispiel sind die Kontaktflächen 220, 230, 320, 330, in der in Fig. 1C dargestellten Querschnittsebene jeweils schräg zur Eingriffsrichtung E erstreckt und weisen den gleichen schrägen Winkel, zum Beispiel in einem Bereich zwischen 5° und 80°, insbesondere zwischen 20° und 60°, zur Eingriffsrichtung E auf.

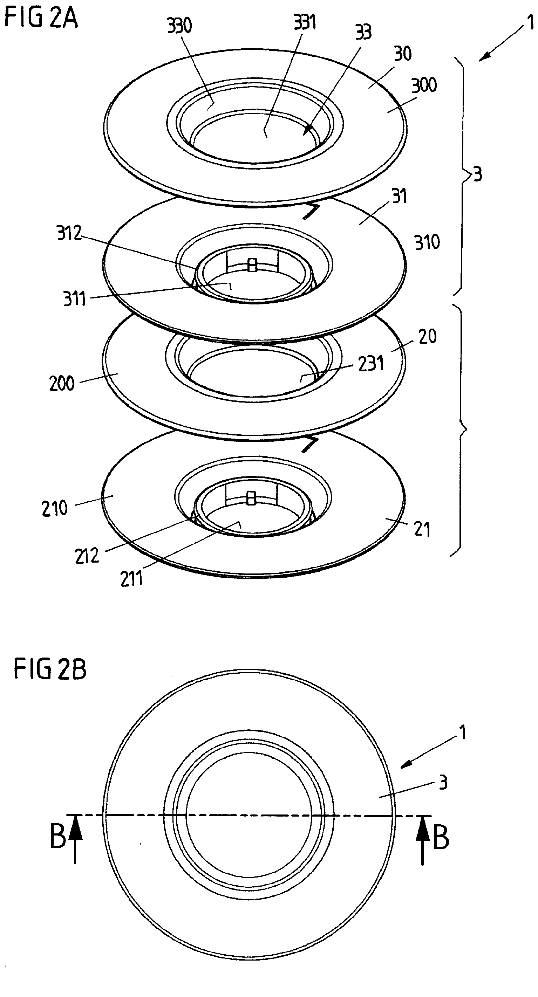

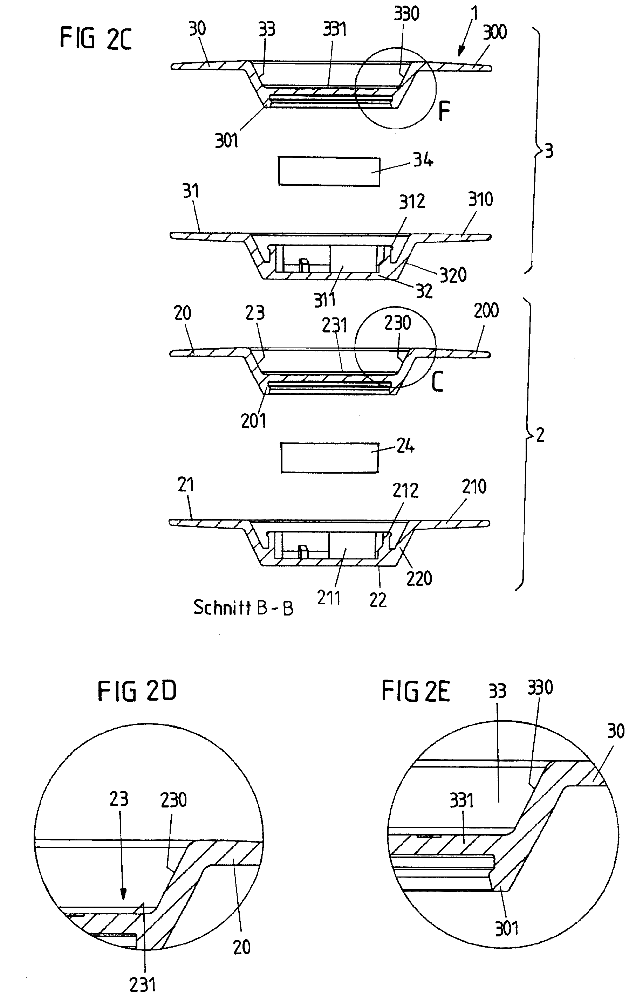

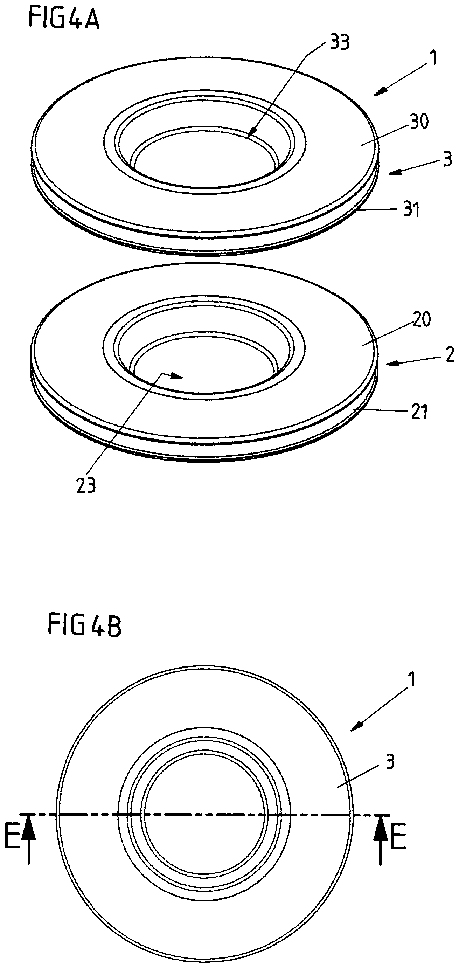

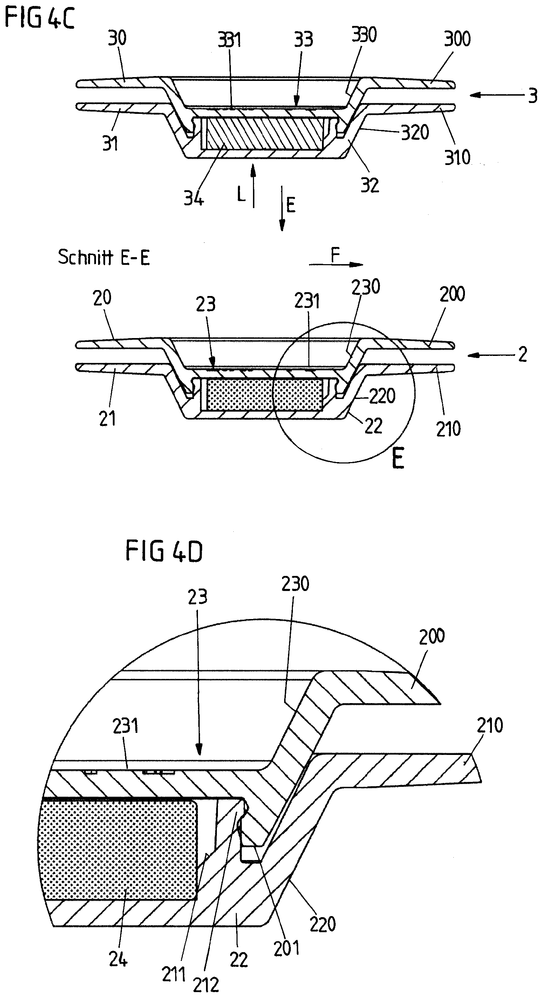

Bei einem in Fig. 2A-2E bis 4A-4D dargestellten Ausführungsbeispiel sind Verbindungsteile 2, 3 der Verbindungsvorrichtung 1 durch jeweils zwei Gehäuseteile 20, 21, 30, 31 gebildet, die zur Ausbildung des jeweiligen Verbindungsteils 2, 3 rastend miteinander verbunden sind und jeweils ein Magnetelement 24, 34 zwischen sich aufnehmen.

Ein jedes Verbindungsteil 2, 3 weist hierbei ein oberes Gehäuseteil 20, 30 und ein unteres Gehäuseteil 21, 31 auf. In montierter Stellung ist das jeweilige Magnetelement 24, 34 zwischen den Gehäuseteilen 20, 21, 30, 31 aufgenommen und in einer Aufnahmeöffnung 211, 311 des unteren Gehäuseteils 21, 31 gehalten.

Das obere Gehäuseteil 20 bildet hierbei eine Eingriffsöffnung 23, 33 mit einer Kontaktfläche 230, 330 und einem Boden 231, 331 aus.

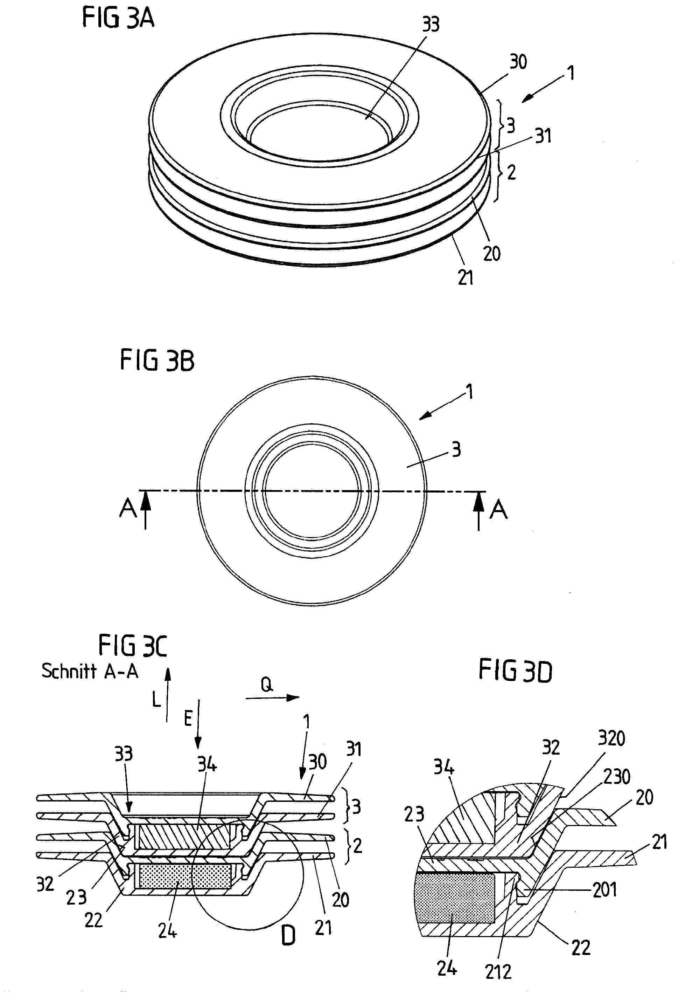

An einer der Eingriffsöffnung 23, 33 abgewandten Seite weist das Gehäuseteil 20, 30 einen umlaufenden Rastabschnitt 201, 301 auf, der mit einem umlaufenden Rastabschnitt 212, 312 an einem die Aufnahmeöffnung 211, 311 ausbildenden Gehäuseabschnitt des unteren Gehäuseteils 21, 31 rastend in Eingriff gebracht werden kann, um die Gehäuseteile 20, 21, 30, 31 miteinander zu verbinden, wie dies beispielsweise aus Fig. 3C und 3D ersichtlich ist.

Das untere Gehäuseteil 21, 31 bildet jeweils einen Eingriffsabschnitt 22, 32 mit einer umlaufenden, konischen Kontaktfläche 220, 320 aus.

Ein jedes Gehäuseteil 20, 21, 30, 31 bildet einen Randabschnitt 200, 210, 300, 310 aus. Zwischen den Randabschnitten 200, 210, 300, 310 der Gehäuseteile 20, 21, 30, 31 eines jeden Verbindungsteils 2, 3 kann eine Baugruppe, zum Beispiel ein textiler Stoff eines Kleidungsstücks, aufgenommen werden, um die Verbindungsteile 2, 3 auf diese Weise mit einer jeweils zugeordneten Baugruppe zu verbinden.

Mit Blick auf die Funktion zur Verbindung und Notöffnung der Verbindungsteile 2, 3 ist das Ausführungsbeispiel gemäß Fig. 2A-2E bis 4A-4D identisch dem Ausführungsbeispiel gemäß Fig. 1A bis 1D, sodass auf die obigen Ausführungen verwiesen werden soll.

In der verbundenen Stellung (Fig. 3A bis 3D) ist der Eingriffsabschnitt 32 eines Verbindungsteils 3 in Eingriff mit der Eingriffsöffnung 23 des anderen Verbindungsteils 2, wobei bei Querbelastung durch Auflaufen der Kontaktflächen 230, 320 aufeinander eine Kraftumlenkung und somit eine Notöffnung zum Trennen der Verbindungsteile 2, 3 in eine Löserichtung L bewirkt wird.

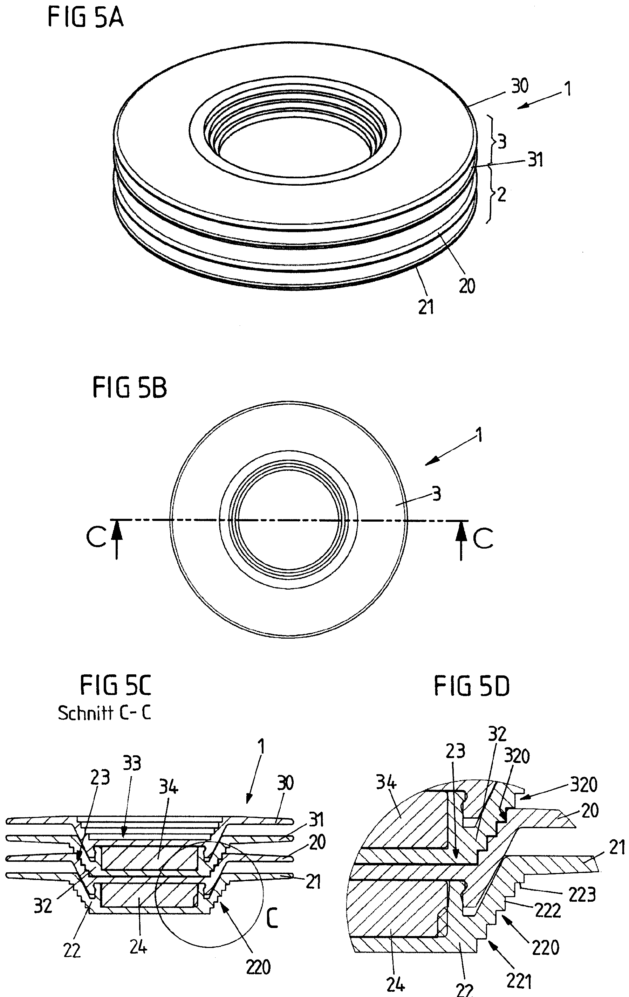

Ein in Fig. 5A bis 5D dargestelltes Ausführungsbeispiel ist vergleichbar dem Ausführungsbeispiel gemäß Fig. 2A-2E bis 4A-4D, unterscheidet sich jedoch dadurch von dem vorhergehenden Ausführungsbeispiel, das die Kontaktflächen 220, 230, 320, 330 jeweils gestuft mit Stufen 221 ausgebildet sind, wie dies insbesondere aus der vergrößerten Ansicht gemäß Fig. 5D ersichtlich ist. Eine jede Stufe 221 ist hierbei durch eine senkrechte Stirnfläche 222 und eine waagerechte Podestfläche 223 gebildet, wobei sich eine jede Kontaktfläche 220, 230, 320, 330 im Ganzen schräg zur Eingriffsrichtung E erstreckt, indem sie einer schräg zur Eingriffsrichtung E erstreckten Erstreckungsrichtung folgt und im Mittel die Steigung dieser Erstreckungsrichtung aufweist.

In verbundener Stellung liegt die Kontaktfläche 320 am Eingriffsabschnitt 32 eines Verbindungsteils 3 in Anlage mit der Kontaktfläche 230 innerhalb der Eingriffsöffnung 23 des anderen Verbindungsteils 2, wie dies aus Fig. 5C und 5D ersichtlich ist. Durch die gestufte Ausgestaltung der Kontaktflächen 220, 230, 320, 330 kann hierbei die Bewegbarkeit der Kontaktflächen 220, 230, 320, 330 zueinander bei Querbelastung eingestellt werden, sodass die für eine Notöffnung erforderliche Lösekraft dimensioniert werden kann.

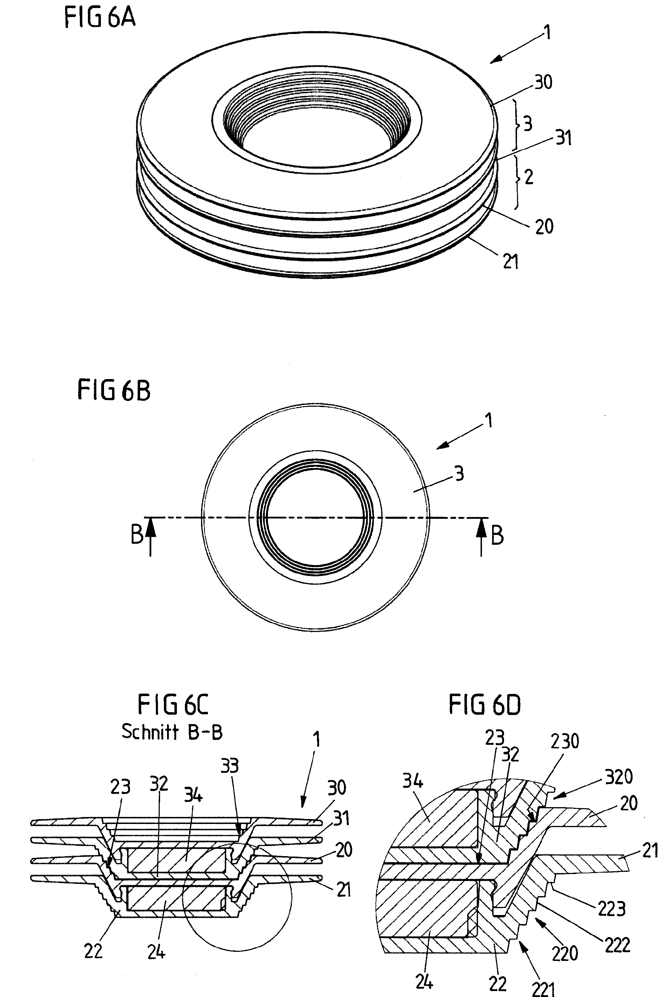

Wie aus Fig. 6A bis 6D ersichtlich ist, kann eine gestufte Ausgestaltung hierbei auch dadurch erreicht werden, dass die Stirnflächen 222 der Stufen 221 an den Kontaktflächen 220, 230, 320, 330 schräg (zum Beispiel unter einem Winkel zwischen 5° und 20°) zur Eingriffsrichtung E erstreckt sind.

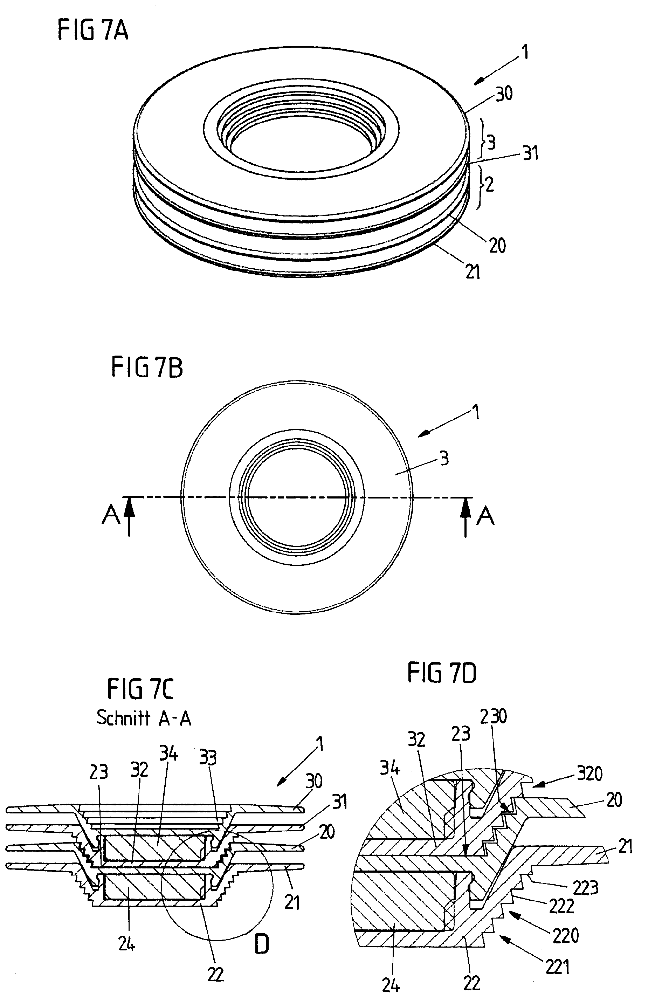

Alternativ können die Stirnflächen 222, wie bei dem Ausführungsbeispiel gemäß Fig. 7A bis 7D, auch einen Hinterschnitt ausbilden, um ein gleitendes Übereinanderbewegen der Kontaktflächen 220, 230, 320, 330 zu erschweren oder gar zu verhindern.

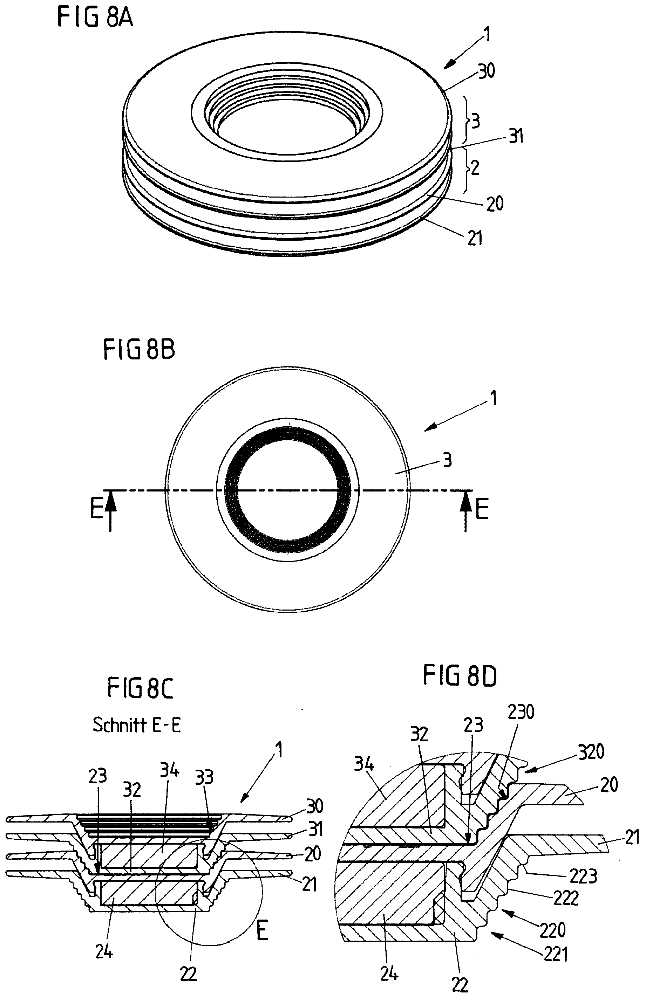

Wiederum alternativ können Übergänge zwischen den Stirnflächen 222 und den Podestflächen 223 der Stufen 221 abgerundet sein, wie bei dem Ausführungsbeispiel gemäß Fig. 8A bis 8D.

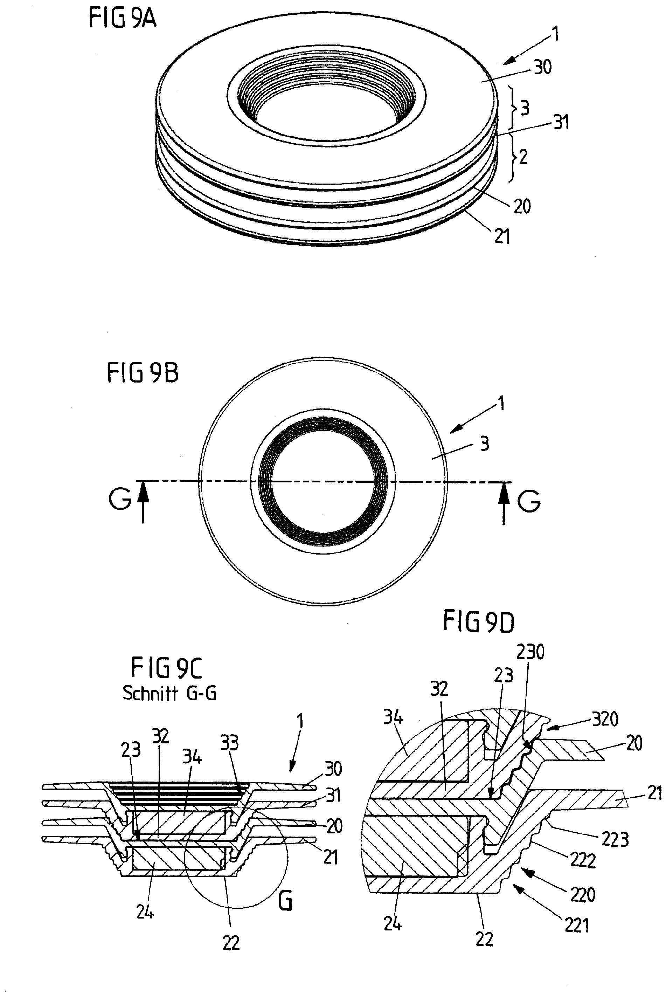

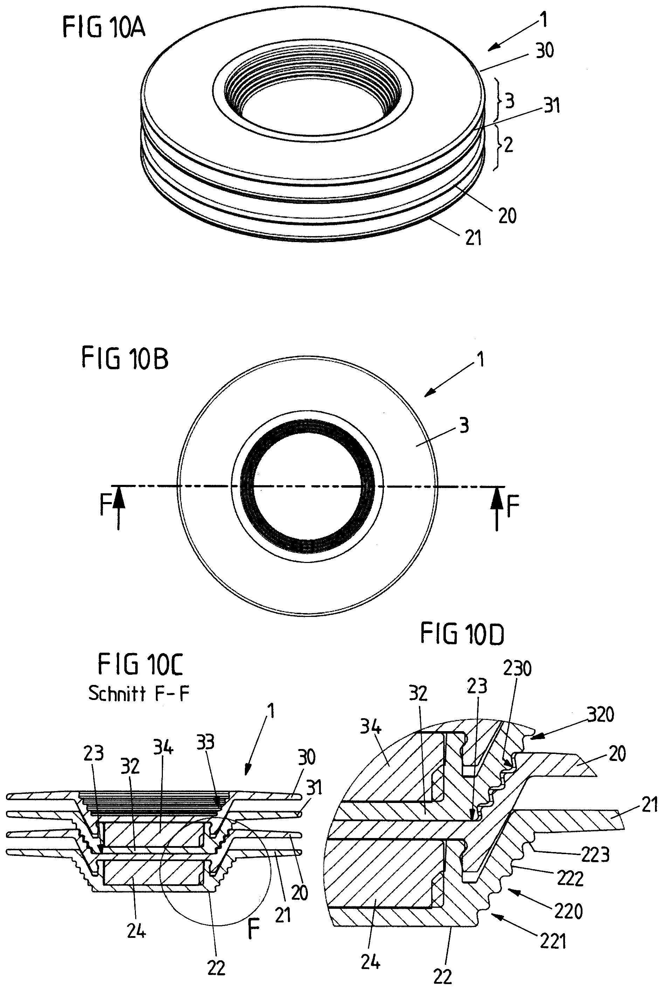

Die Stirnflächen 222 der Stufen 221 können auch bei einer solchen abgerundeten Ausgestaltung schräg gestellt sein, wie bei dem Ausführungsbeispiel gemäß Fig. 9A bis 9D, oder einen Hinterschnitt ausbilden, wie bei dem Ausführungsbeispiel gemäß Fig. 10A bis 10D.

Die Stufen 221 bilden Strukturelemente an den Kontaktflächen 220, 230, 320, 330 aus, mittels derer eine tangentiale, gleitende Bewegung der Kontaktflächen 220, 230, 320, 330 zueinander eingestellt werden kann. Solche Strukturelemente unterbrechen die generell schräge Erstreckung der Kontaktflächen 220, 230, 320, 330. Die Strukturelemente können sich hierbei, wie bei den Stufen 221 der vorangehend beschriebenen Ausführungsbeispiele, umfänglich um die Kontaktflächen 220, 230, 320, 330 herum erstrecken, können aber auch auf einen oder mehrere Umfangsabschnitte örtlich begrenzt sein.

Anstelle von Stufen 221 können auch andere Strukturelemente vorgesehen sein, beispielsweise in Form von Noppen, Zähnen, Wellen, Rippen oder dergleichen.

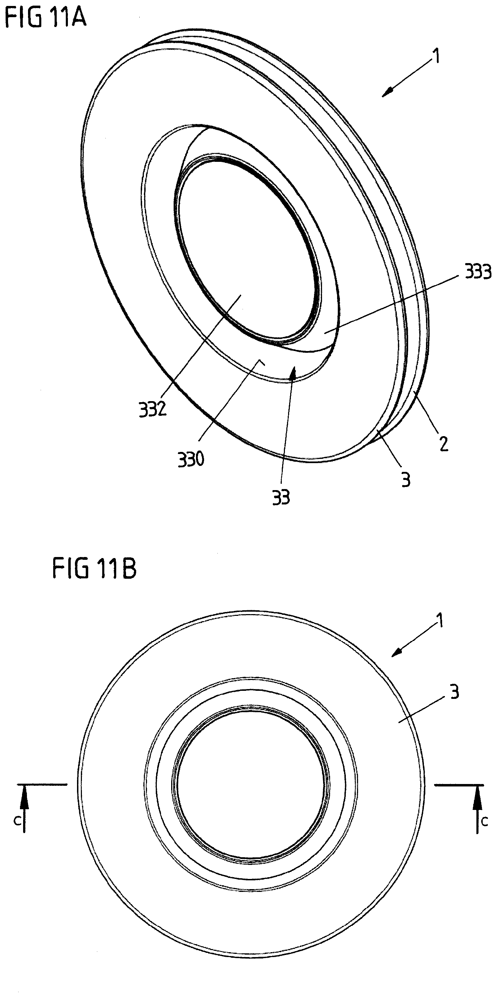

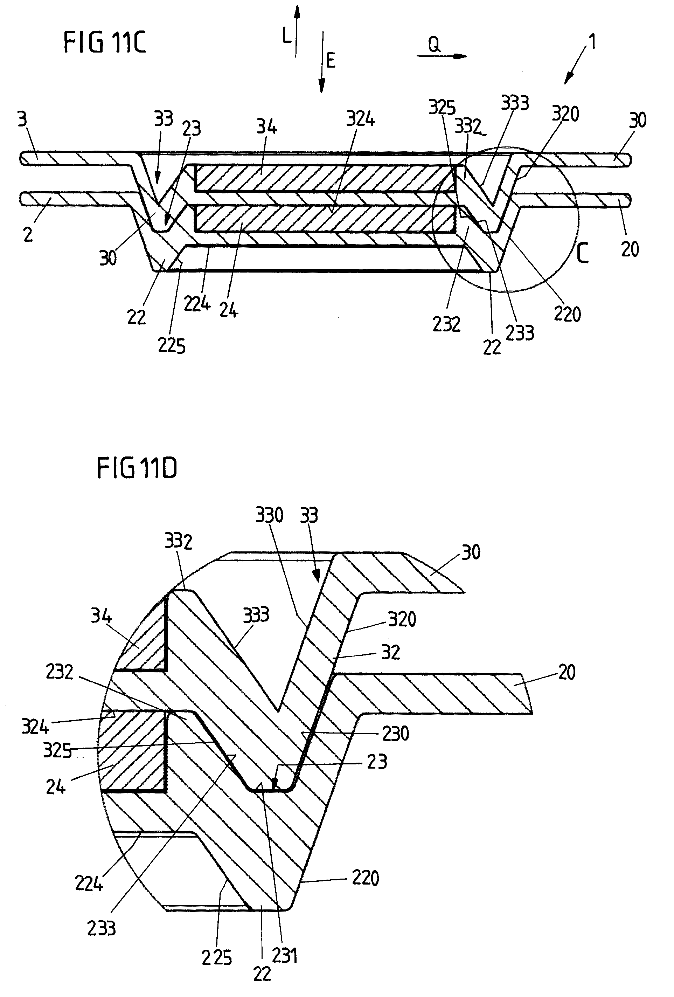

Bei einem in Fig. 11A bis 11D dargestellten Ausführungsbeispiel ist - im Vergleich zum Ausführungsbeispiel gemäß Fig. 1A bis 1D - im Bereich der Eingriffsöffnung 23, 33 eines jeden Verbindungsteils 2, 3 ein erhabener Abschnitt 232, 332 in Form eines Kegelstumpfes gebildet, der entgegen der Eingriffsrichtung E vorsteht und durch eine umfängliche Auflauffläche 233, 333 begrenzt ist. Komplementär ist an dem Eingriffsabschnitt 22, 32 eines jeden Verbindungsteils 2, 3 eine Aufnahmeöffnung 224, 324 geformt, die durch eine umlaufende Auflauffläche 225, 325 begrenzt ist.

In verbundener Stellung greift der Eingriffsabschnitt 32 eines Verbindungsteils 3 in die Eingriffsöffnung 23 des anderen Verbindungsteils 2 ein, wie dies aus Fig. 11C ersichtlich ist. Dabei greift der erhabene Abschnitt 232 im Bereich des Bodens 231 der Eingriffsöffnung 23 in die Aufnahmeöffnung 324 am Eingriffsabschnitt 32 ein, sodass darüber ein Querhalt der Verbindungsteile 2, 3 zueinander verbessert ist.

Bei Querbelastung der Verbindungsteile 2, 3 relativ zueinander laufen die Kontaktflächen 230, 320 der Eingriffsöffnung 23 und des Eingriffsabschnitts 32 aufeinander auf, wie dies vorangehend anhand von Fig. 1A bis 1D beschrieben worden ist. Zudem laufen die Auflaufflächen 233, 325 des erhabenen Abschnitts 232 und der Aufnahmeöffnung 324 aufeinander auf, sodass sich wiederum eine Notöffnungsfunktionalität ergibt.

Wie bei dem Ausführungsbeispiel gemäß Fig. 1A bis 1D sind die Kontaktflächen 220, 230, 320, 330 schräg zur Eingriffsrichtung E erstreckt, sodass sich eine konische, verjüngte Form an den Eingriffsabschnitten 22, 32 und den Eingriffsöffnungen 23, 33 ergibt.

Auch die Auflaufflächen 225, 233, 325, 333 sind schräg zur Eingriffsrichtung E gestellt, wobei die Auflaufflächen 225, 233, 325, 333 bei dem dargestellten Ausführungsbeispiel einen größeren Winkel zur Eingriffsrichtung E aufweisen.

Ansonsten ist das Ausführungsbeispiel gemäß Fig. 11A bis 11D funktionsgleich dem Ausführungsbeispiel gemäß Fig. 1A bis 1D, sodass auch auf die obigen Ausführungen verwiesen werden soll.

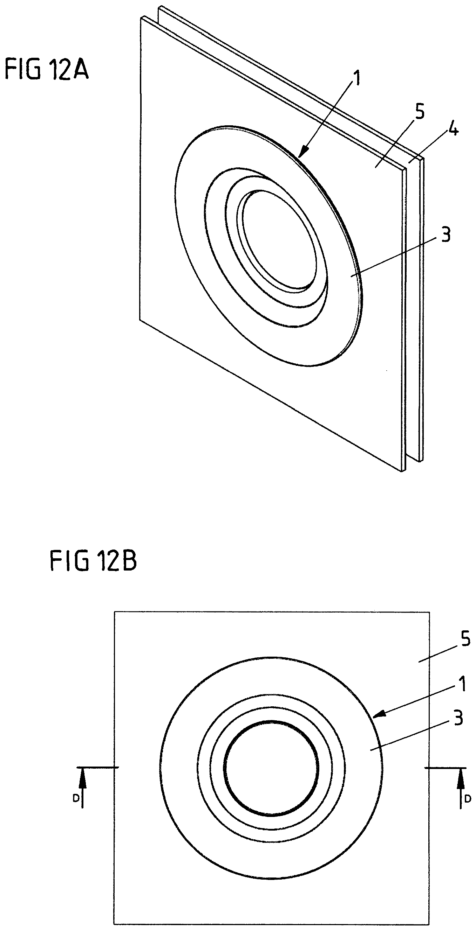

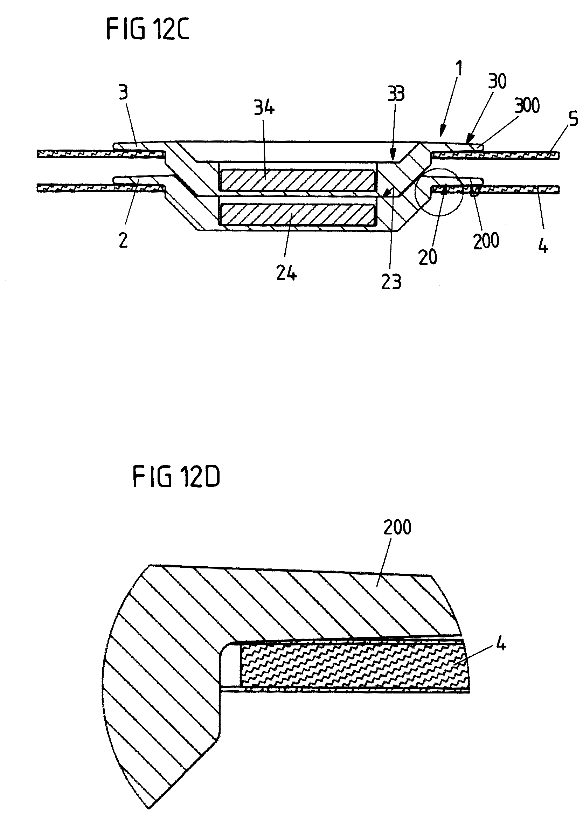

Bei einem in Fig. 12A bis 12D dargestellten Ausführungsbeispiel sind die Verbindungsteile 2, 3 der Verbindungsvorrichtung 1, wie bei dem Ausführungsbeispiel gemäß Fig. 1A bis 1D, mit jeweils einem einzigen Gehäuseteil 20, 30 ausgebildet. Die Gehäuseteile 20, 30 bilden jeweils einen Randabschnitt 200, 300 auf, der sich umfänglich um die jeweils zugeordnete Eingriffsöffnung 23, 33 erstreckt und über die eine zugeordnete Baugruppe 4, 5, zum Beispiel ein textiler Stoff eines Kleidungsstück, mit dem jeweiligen Verbindungsteil 2, 3 verbunden ist. Die Verbindung kann beispielsweise mechanisch oder chemisch, zum Beispiel durch Kleben, Nähen, Schweißen oder Nieten erfolgen.

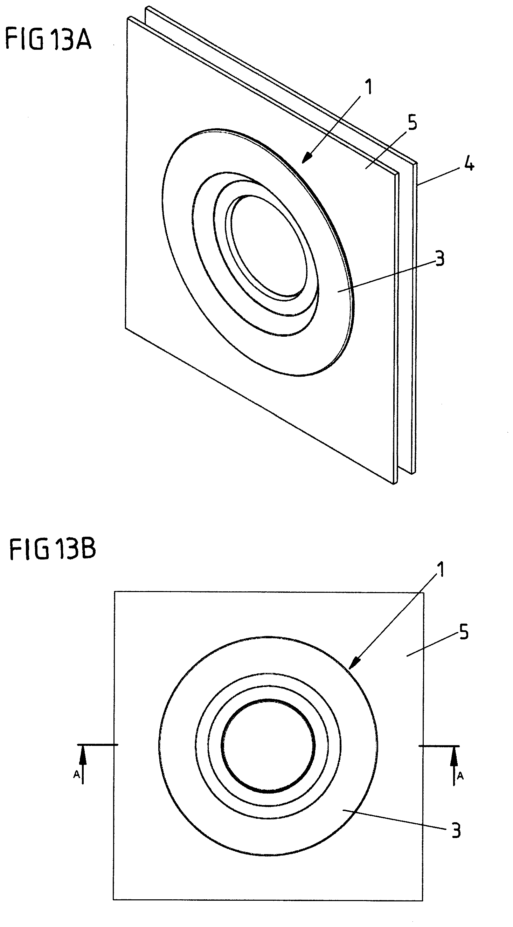

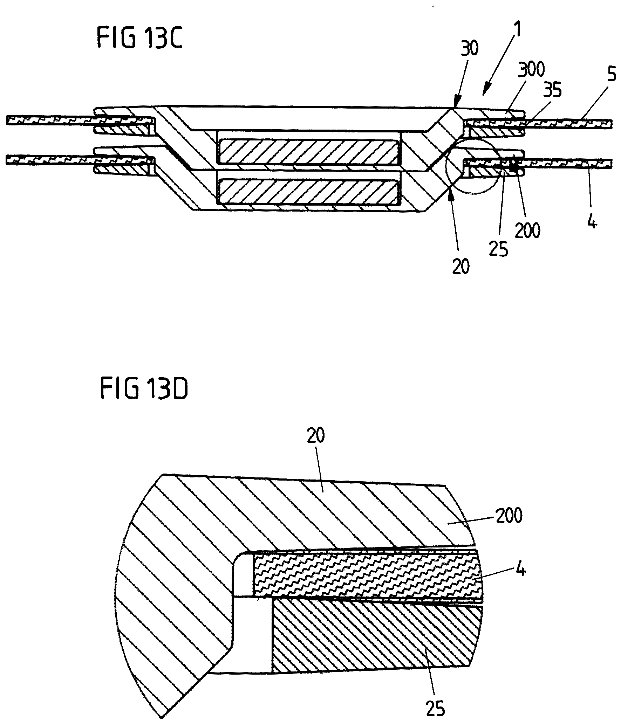

Bei einem in Fig. 13A bis 13D dargestellten Ausführungsbeispiel ist zusätzlich, im Vergleich zum Ausführungsbeispiel gemäß Fig. 12A bis 12D, ein Befestigungselement 25, 35 in Form eines Rings vorgesehen, der an eine dem jeweiligen Randabschnitt 200, 300 abgewandte Seite der jeweiligen Baugruppe 4, 5 angesetzt ist, um auf diese Weise die Baugruppe 4, 5 an einer dem Randabschnitt 200, 300 abgewandten Seite zu überdecken und die Verbindung zu stärken.

Bei den vorangehend beschriebenen Ausführungsbeispielen sind die Verbindungsteile 2, 3 jeweils in ihrer Grundform rotationssymmetrisch mit konischen Eingriffsabschnitten 22, 32 und Eingriffsöffnungen 23, 33 ausgebildet. Die Formgebung der Eingriffsabschnitte 22, 32 und der Eingriffsöffnungen 23, 33 ist jedoch, in einer Querschnittsebene quer zur Eingriffsrichtung E, grundsätzlich beliebig und kann insbesondere von einer Rotationssymmetrie abweichen.

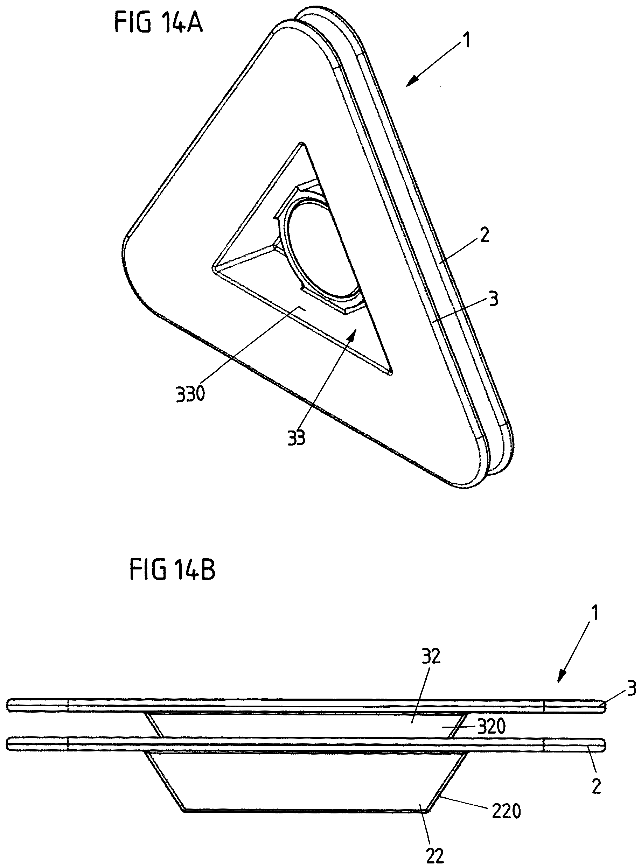

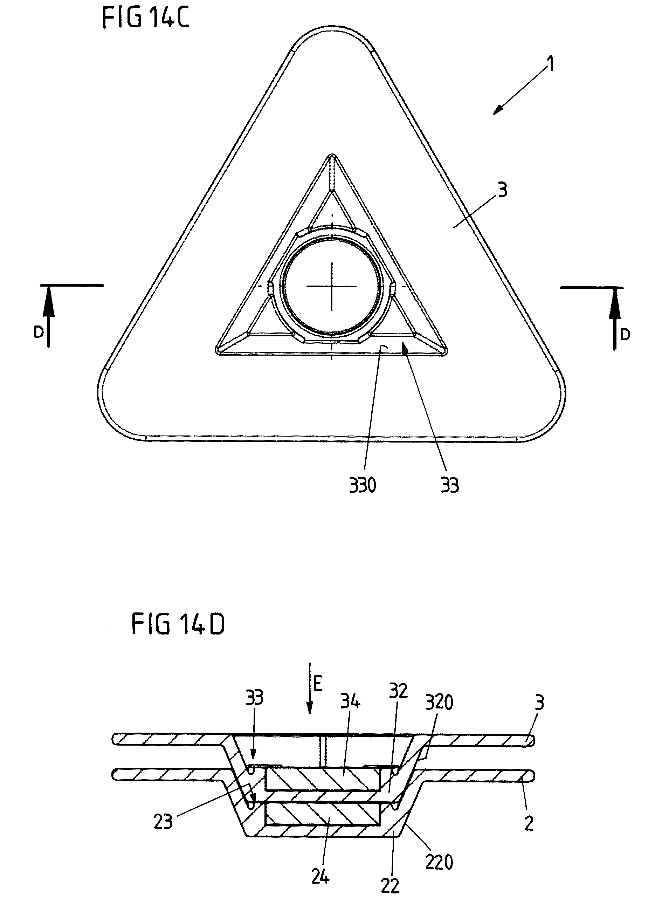

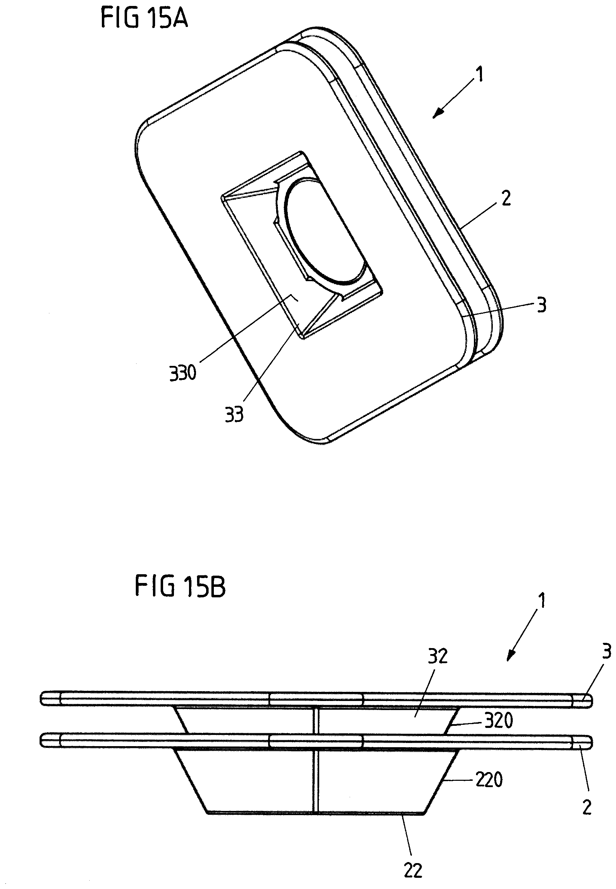

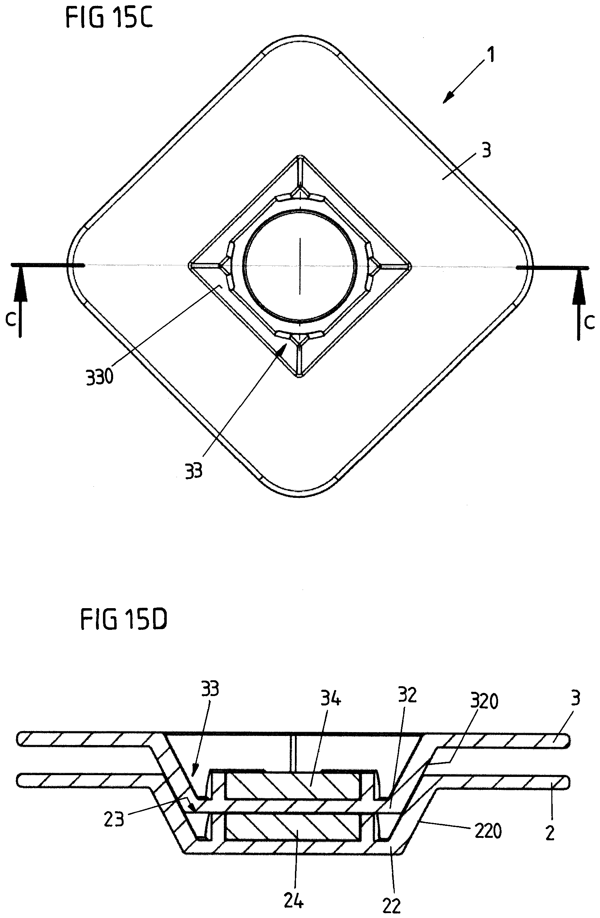

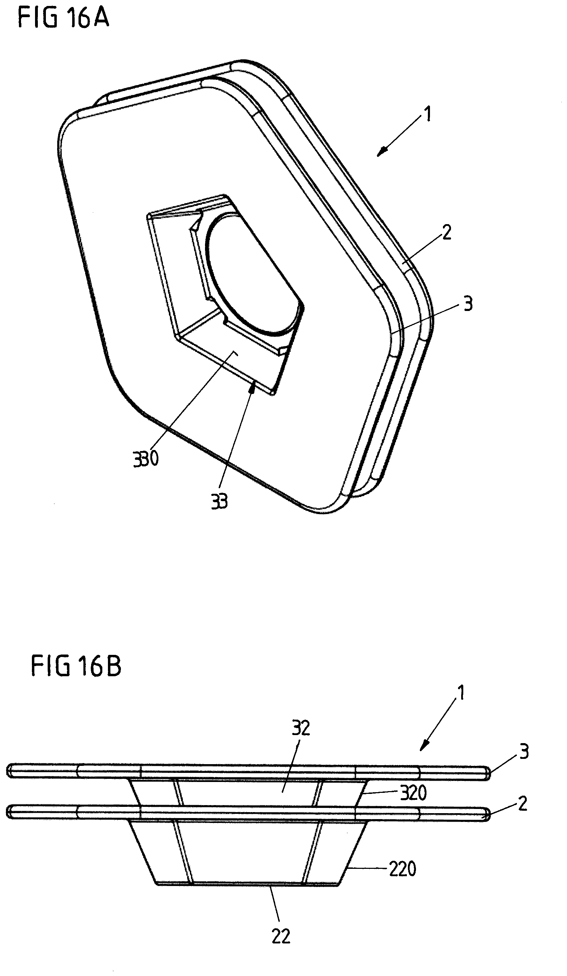

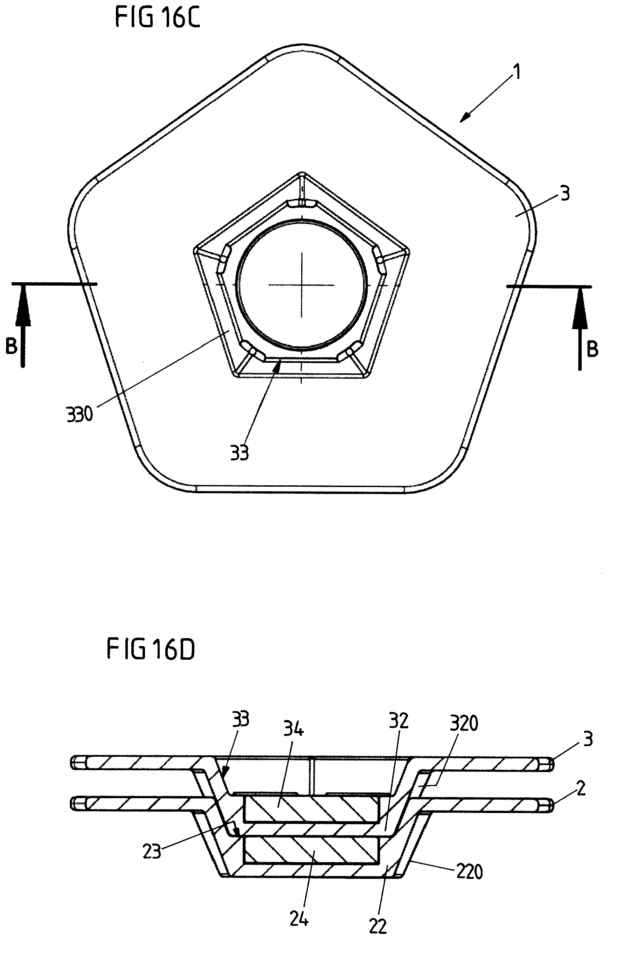

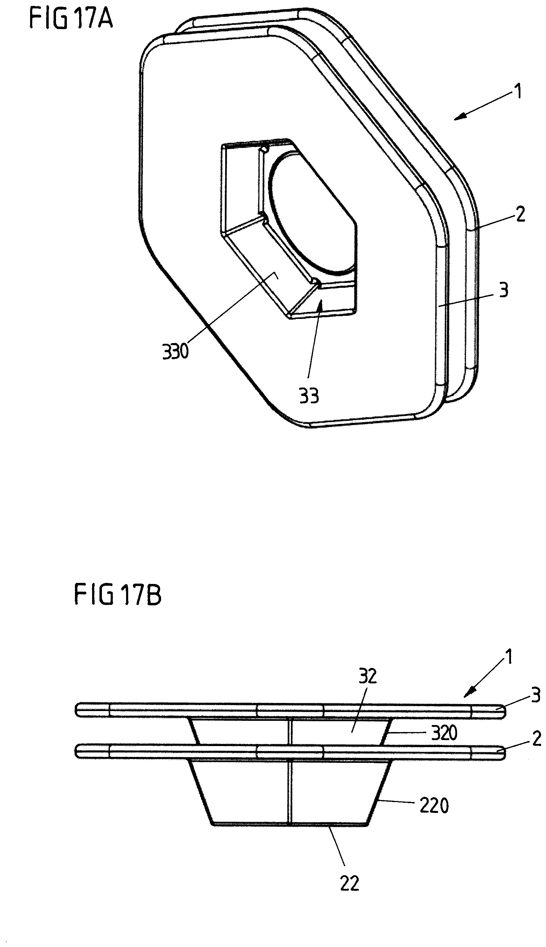

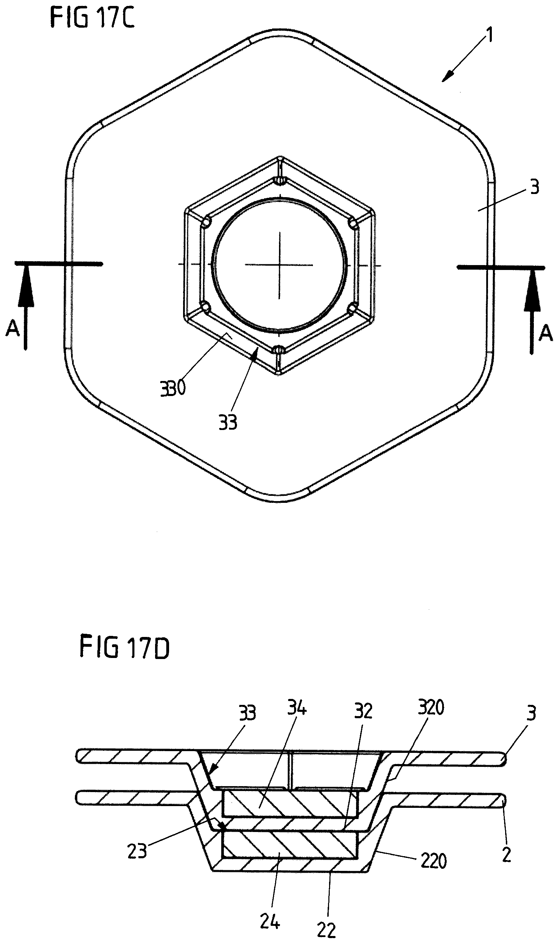

Bei einem in Fig. 14A bis 14D dargestellten Ausführungsbeispiel sind die Eingriffsabschnitte 22, 32 und die Eingriffsöffnungen 23, 33 im Querschnitt quer zur Eingriffsrichtung E dreieckig geformt. Bei einem in Fig. 15A bis 15D dargestellten Ausführungsbeispiel sind die Eingriffsabschnitte 22, 32 und die Eingriffsöffnungen 23, 33 im Querschnitt quer zur Eingriffsrichtung E demgegenüber viereckig, bei einem in Fig. 16A bis 16D dargestellten Ausführungsbeispiel fünfeckig und bei einem in Fig. 17A bis 17D dargestellten Ausführungsbeispiel sechseckig geformt. Jeweils sind die mehreckigen Formen gleichschenklig ausgebildet, also mit gleichen Kantenlängen, was jedoch nicht beschränkend ist. Gegebenenfalls können die Kantenlängen auch unterschiedlich sein.

Grundsätzlich sind beliebige, auch unregelmäßige Querschnittsformen an den Eingriffsabschnitten 22, 32 und den Eingriffsöffnungen 23, 33 denkbar und möglich.

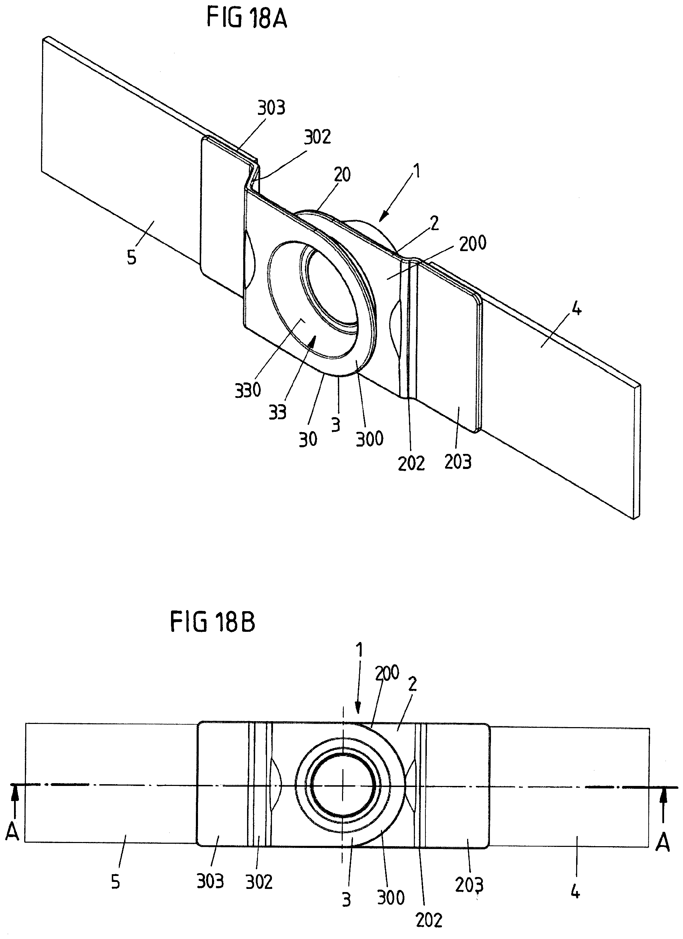

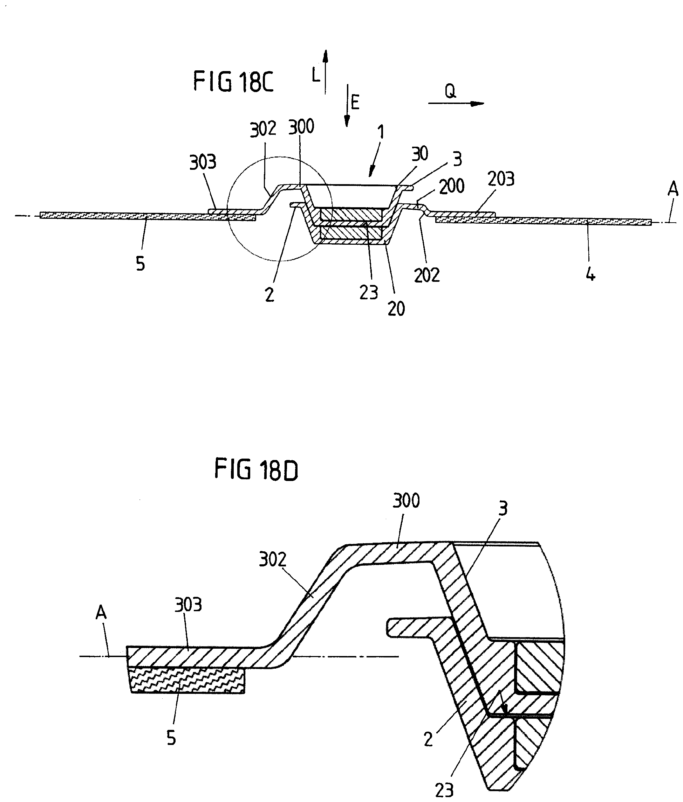

Bei einem in Fig. 18A bis 18D dargestellten Ausführungsbeispiel sind Anbindungsabschnitte 203, 303 über abgewinkelte Versatzabschnitte 202, 302 mit den Randabschnitten 200, 300 der Gehäuseteile 20, 30 der Verbindungsteile 2, 3 einer Verbindungsvorrichtung 1 verbunden. Über die Versatzabschnitte 202, 302 sind die Anbindungsabschnitte 203, 303 hierbei derart zu den Randabschnitten 200, 300 angeordnet, dass die Anbindungsabschnitte 203, 303 entlang einer gemeinsamen Ebene erstreckt sind. Über die Anbindungsabschnitte 203, 303 erfolgt eine Anbindung von zugeordneten Baugruppen 4, 5, zum Beispiel von textilem Stoff eines Kleidungsstückes. Aufgrund der Anordnung der Anbindungsabschnitte 203, 303 fluchtend zueinander erfolgt eine Querbelastung entlang einer Querrichtung Q, die über die Baugruppen 4, 5 eingeleitet wird, in einer gemeinsamen Ebene A, die beispielsweise in etwa mittig durch die Eingriffsöffnung 23 des Verbindungsteils 2 weist und somit einen symmetrischen Krafteintrag bewirkt.

Bei den vorangehend beschriebenen Ausführungsbeispielen sind die Kontaktflächen 220, 230, 320, 330 in einer durch die Eingriffsrichtung E und die Querrichtung Q aufgespannten Querschnittsebene jeweils geradlinig erstreckt und dabei schräg zur Eingriffsrichtung E gestellt. Dies ist jedoch nicht beschränkend.

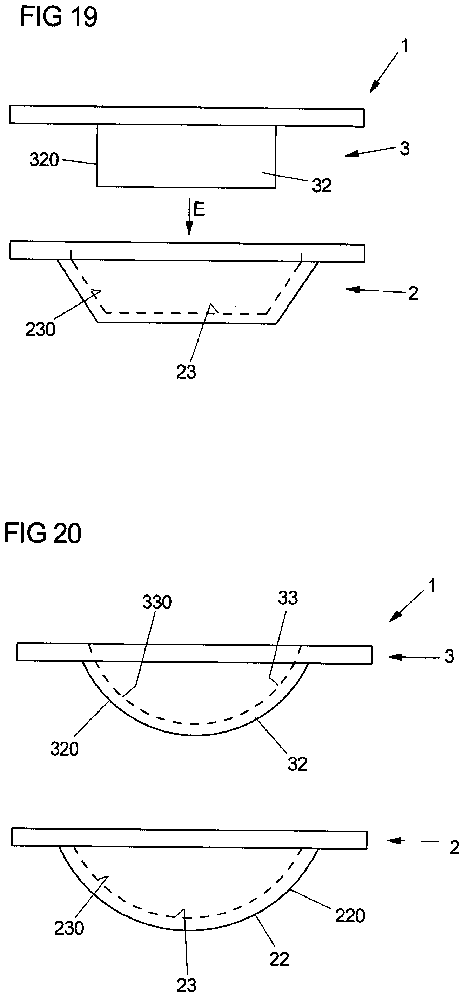

So kann beispielsweise lediglich eins der Verbindungsteile 2, 3 eine konische Kontaktfläche 230 an einer Eingriffsöffnung 23 aufweisen, wie bei dem Ausführungsbeispiel gemäß Fig. 19, während eine Kontaktfläche 320 an einem Eingriffsabschnitt 32 des anderen Verbindungsteil 3 parallel zur Eingriffsrichtung E erstreckt ist.

Die Kontaktflächen 220, 230, 320, 330 können auch gekrümmt ausgebildet sein, wie dies bei dem Ausführungsbeispiel gemäß Fig. 20 dargestellt ist. So können die Eingriffsabschnitte 22, 32 und die Eingriffsöffnungen 23, 33 jeweils eine ballige, kugelige Form mit gekrümmten Kontaktflächen 220, 230, 320, 330 aufweisen.

Der der Erfindung zugrunde liegende Gedanke ist nicht auf die vorangehend geschilderten Ausführungsbeispiele beschränkt, sondern lässt sich auch in anderer Weise verwirklichen, solange diese im Schutzbereich der Ansprüche liegt.

Eine Verbindungsvorrichtung der beschriebenen Art lässt sich in vielfältiger Weise einsetzen, beispielsweise an Kleidungsstücken oder an Verschlüssen für Bänder oder dergleichen. Insbesondere ist eine Verbindungsvorrichtung überall dort einsetzbar, wo in geschlossener Stellung eine feste Verbindung, aber mit der Möglichkeit für eine Notöffnung bei einer eine Grenzkraft überschreitenden Querbelastung gewünscht ist.

### Bezugszeichenliste

- 1: Verbindungsvorrichtung
- 2: Verbindungsteil
- 20: Gehäuseteil
- 200: Randabschnitt
- 201: Rastabschnitt
- 202: Versatzabschnitt
- 203: Anbindungsabschnitt
- 21: Gehäuseteil
- 210: Randabschnitt
- 211: Aufnahmekammer
- 212: Rastabschnitt
- 22: Eingriffsabschnitt
- 220: Kontaktfläche
- 221: Strukturelement (Stufe)
- 222: Flächenabschnitt (Stirnfläche)
- 223: Flächenabschnitt (Podestfläche)
- 224: Aufnahmeöffnung
- 225: Kontaktfläche
- 23: Eingriffsöffnung
- 230: Kontaktfläche
- 231: Boden
- 232: Erhabener Abschnitt
- 233: Auflauffläche
- 24: Magnetelement
- 25: Befestigungselement
- 3: Verbindungsteil
- 30: Gehäuseteil
- 300: Randabschnitt
- 301: Rastabschnitt
- 302: Versatzabschnitt
- 303: Anbindungsabschnitt
- 31: Gehäuseteil
- 310: Randabschnitt
- 311: Aufnahmekammer
- 312: Rastabschnitt
- 32: Eingriffsabschnitt
- 320: Kontaktfläche
- 324: Aufnahmeöffnung
- 325: Auflauffläche
- 33: Eingriffsöffnung
- 330: Kontaktfläche
- 331: Boden
- 332: Erhabener Abschnitt
- 333: Auflauffläche
- 34: Magnetelement
- 35: Befestigungselement
- 4, 5: Baugruppe
- A: Ebene
- E: Eingriffsrichtung
- L: Löserichtung
- Q: Querrichtung

## Patentansprüche

1. Verbindungsvorrichtung (1) zum lösbaren Verbinden zweier Baugruppen (4, 5), mit
einem ersten Verbindungsteil (2), das eine Eingriffsöffnung (23) und ein erstes Magnetelement (24) aufweist, und
einem zweiten Verbindungsteil (3), das einen Eingriffsabschnitt (32) und ein zweites Magnetelement (34) aufweist, wobei das erste Verbindungsteil (2) und das zweite Verbindungsteil (3) miteinander verbindbar sind, indem der Eingriffsabschnitt (32) des zweiten Verbindungsteils (3) in eine Eingriffsrichtung (E) mit der Eingriffsöffnung (23) des ersten Verbindungsteils (2) in Eingriff bringbar ist, wobei das erste Magnetelement (24) und das zweite Magnetelement (34) beim Verbinden des ersten Verbindungsteils (2) und des zweiten Verbindungsteils (3) magnetisch anziehend zusammenwirken,
wobei die Eingriffsöffnung (23) und der Eingriffsabschnitt (32) in einer durch die Eingriffsrichtung (E) und eine quer zur Eingriffsrichtung (E) erstreckte Querrichtung (Q) aufgespannten Querschnittsebene eine sich in die Eingriffsrichtung (E) verjüngende Form aufweist, das erste Verbindungsteil (2) eine die Eingriffsöffnung (23) zumindest abschnittsweise begrenzende, erste Kontaktfläche (230) und das zweite Verbindungsteil (3) eine den Eingriffsabschnitt (32) zumindest abschnittsweise begrenzende, zweite Kontaktfläche (320) aufweisen,
wobei die erste Kontaktfläche (230) und die zweite Kontaktfläche (320) in einer verbundenen Stellung, in der der Eingriffsabschnitt (32) des zweiten Verbindungsteils (3) mit der Eingriffsöffnung (23) des ersten Verbindungsteils (2) in Eingriff ist, einander zugewandt sind, wobei die erste Kontaktfläche (230) umlaufend um die Eingriffsöffnung (23) des ersten Verbindungsteils (2) erstreckt ist und die zweite Kontaktfläche (320) umlaufend um den Eingriffsabschnitt (32) des zweiten Verbindungsteils (3) erstreckt ist.
**dadurch gekennzeichnet, dass** das erste Verbindungsteil (2) einen weiteren Eingriffsabschnitt (22) und/oder das zweite Verbindungsteil (3) eine weitere Eingriffsöffnung (33) aufweisen.

2. Verbindungsvorrichtung (1) nach Anspruch 1, **dadurch gekennzeichnet, dass** zumindest eine der Kontaktflächen (230, 320) gekrümmt ist oder schräg zu der Eingriffsrichtung (E) erstreckt ist.

3. Verbindungsvorrichtung (1) nach Anspruch 1 oder 2, **dadurch gekennzeichnet, dass** die erste Kontaktfläche (230) und die zweite Kontaktfläche (320) jeweils gekrümmt oder unter einem schrägen Winkel zu der Eingriffsrichtung (E) erstreckt sind.

4. Verbindungsvorrichtung (1) nach einem der Ansprüche 1 bis 3, **dadurch gekennzeichnet, dass** die erste Kontaktfläche (230) und die zweite Kontaktfläche (320) ausgebildet sind, bei einer entlang der Querrichtung (Q) gerichteten Kraftwirkung zwischen dem ersten Verbindungsteil (2) und dem zweiten Verbindungsteil (3) aufeinander aufzulaufen und eine Kraftumlenkung zum Trennen des ersten Verbindungsteils (2) und des zweiten Verbindungsteils (3) voneinander zu bewirken.

5. Verbindungsvorrichtung (1) nach einem der vorangehenden Ansprüche, **dadurch gekennzeichnet, dass** die erste Kontaktfläche (230) und die zweite Kontaktfläche (320) die gleiche Krümmung oder den gleichen schrägen Winkel zu der Eingriffsrichtung (E) aufweisen.

6. Verbindungsvorrichtung (1) nach einem der vorangehenden Ansprüche, **dadurch gekennzeichnet, dass** die erste Kontaktfläche (230) und/oder die zweite Kontaktfläche (320) zumindest ein Strukturelement (221) mit zumindest einem von einer gekrümmten oder schrägen Erstreckungsrichtung der Kontaktfläche (230, 320) abweichenden Flächenabschnitt (222, 223) aufweisen.

7. Verbindungsvorrichtung (1) nach Anspruch 6, **dadurch gekennzeichnet, dass** die erste Kontaktfläche (230) und/oder die zweite Kontaktfläche (320) zumindest eine Stufe aufweisen.

8. Verbindungsvorrichtung (1) nach einem der vorangehenden Ansprüche, **dadurch gekennzeichnet, dass** die Eingriffsöffnung (23) durch einen Boden (231) begrenzt ist, wobei das erste Magnetelement (24) im Bereich des Bodens (231) angeordnet ist.

9. Verbindungsvorrichtung (1) nach einem der vorangehenden Ansprüche, **dadurch gekennzeichnet, dass** innerhalb der Eingriffsöffnung (23) ein entgegen der Eingriffsrichtung (E) weisender, erhabener Abschnitt (232) angeordnet ist, der bei mit der Eingriffsöffnung (23) in Eingriff stehendem Eingriffsabschnitt (32) in eine Aufnahmeöffnung (324) an dem Eingriffsabschnitt (32) eingreift.

10. Verbindungsvorrichtung (1) nach einem der vorangehenden Ansprüche, **dadurch gekennzeichnet, dass** die Eingriffsöffnung (23) und/oder der Eingriffsabschnitt (320) im Querschnitt quer zur Eingriffsrichtung (E) rund oder mehreckig ausgebildet ist.

11. Verbindungsvorrichtung (1) nach einem der vorangehenden Ansprüche, **dadurch gekennzeichnet, dass** das erste Verbindungsteil (2) und das zweite Verbindungsteil (3) als Gleichteile ausgebildet sind.

12. Verbindungsvorrichtung (1) nach einem der vorangehenden Ansprüche, **dadurch gekennzeichnet, dass** das erste Verbindungsteil (2) zwei erste Gehäuseteile (20, 21) aufweist, die das erste Magnetelement (24) zwischen sich aufnehmen, und/oder das zweite Verbindungsteil (3) zwei zweite Gehäuseteile (30, 31) aufweist, die das zweite Magnetelement (34) zwischen sich aufnehmen.

13. Verbindungsvorrichtung (1) nach einem der vorangehenden Ansprüche, **dadurch gekennzeichnet, dass** das erste Verbindungsteil (2) einen um die Eingriffsöffnung (23) herum erstreckten, ersten Randabschnitt (200, 210) zur Verbindung mit einer ersten Baugruppe (4) und/oder das zweite Verbindungsteil (3) einen um den Eingriffsabschnitt (32) herum erstreckten, zweiten Randabschnitt (300, 310) zur Verbindung mit einer zweiten Baugruppe (5) aufweisen.

14. Verbindungsvorrichtung (1) nach einem der vorangehenden Ansprüche, **dadurch gekennzeichnet, dass** das erste Verbindungsteil (2) einen ersten Anbindungsabschnitt (203) zur Verbindung mit einer ersten Baugruppe (4) und das zweite Verbindungsteil (3) einen zweiten Anbindungsabschnitt (303) zur Verbindung mit einer zweiten Baugruppe (5) aufweisen, wobei der erste Anbindungsabschnitt (203) und der zweite Anbindungsabschnitt (303) entlang einer gemeinsamen, quer zur Eingriffsrichtung (E) erstreckten Ebene (A) erstreckt sind.

## Claims

1. A connecting device (1) for releasably connecting two assemblies (4, 5), comprising
a first connecting part (2) which includes an engagement opening (23) and a first magnetic element (24), and
a second connecting part (3) which includes an engaging portion (32) and a second magnetic element (34), wherein the first connecting part (2) and the second connecting part (3) can be connected with each other in that the engaging portion (32) of the second connecting part (3) can be brought into engagement with the engagement opening (23) of the first connecting part (2) in an engagement direction (E), wherein the first magnetic element (24) and the second magnetic element (34) cooperate in a magnetically attracting manner when the first connecting part (2) and the second connecting part (3) are connected,
wherein the engagement opening (23) and the engaging portion (32) have a shape tapering in the engagement direction (E) in a cross-sectional plane defined by the engagement direction (E) and a transverse direction (Q) extending transversely to the engagement direction (E), the first connecting part (2) has a first contact surface (230) at least sectionally delimiting the engagement opening (23), and the second connecting part (3) has a second contact surface (320) at least sectionally delimiting the engaging portion (32),
wherein in a connected position, in which the engaging portion (32) of the second connecting part (3) is in engagement with the engagement opening (23) of the first connecting part (2), the first contact surface (230) and the second contact surface (320) face each other, wherein the first contact surface (230) circumferentially extends around the engagement opening (23) of the first connecting part (2) and the second contact surface (320) circumferentially extends around the engaging portion (32) of the second connecting part (3),
**characterized in that** the first connecting part (2) includes a further engaging portion (22) and/or the second connecting part (3) includes a further engagement opening (33).

2. The connecting device (1) according to claim 1, **characterized in that** at least one of the contact surfaces (230, 320) is curved or extends obliquely to the engagement direction (E).

3. The connecting device (1) according to claim 1 or 2, **characterized in that** the first contact surface (230) and the second contact surface (320) each are curved or extend at an oblique angle to the engagement direction (E).

4. The connecting device (1) according to any of claims 1 to 3, **characterized in that** the first contact surface (230) and the second contact surface (320) are configured to run up onto each other when a force directed along the transverse direction (Q) acts between the first connecting part (2) and the second connecting part (3), and to effect a force deflection for separating the first connecting part (2) and the second connecting part (3) from each other.

5. The connecting device (1) according to any of the preceding claims, **characterized in that** the first contact surface (230) and the second contact surface (320) have the same curvature or the same oblique angle to the engagement direction (E).

6. The connecting device (1) according to any of the preceding claims, **characterized in that** the first contact surface (230) and/or the second contact surface (320) include at least one structural element (221) with at least one surface portion (222, 223) deviating from a curved or oblique direction of extension of the contact surface (230, 320).

7. The connecting device (1) according to claim 6, **characterized in that** the first contact surface (230) and/or the second contact surface include at least one step.

8. The connecting device (1) according to any of the preceding claims, **characterized in that** the engagement opening (23) is delimited by a base (231), wherein the first magnetic element (24) is arranged in the region of the base (231).

9. The connecting device (1) according to any of the preceding claims, **characterized in that** within the engagement opening (23) a raised portion (232) pointing against the engagement direction (E) is arranged, which engages into a receiving opening (324) at the engaging portion (32) when the engaging portion (32) is in engagement with the engagement opening (23).

10. The connecting device (1) according to any of the preceding claims, **characterized in that** the engagement opening (23) and/or the engaging portion (320) are formed to be round or polygonal in a cross-section transversely to the engagement direction (E).

11. The connecting device (1) according to any of the preceding claims, **characterized in that** the first connecting part (2) and the second connecting part (3) are formed as identical parts.

12. The connecting device (1) according to any of the preceding claims, **characterized in that** the first connecting part (2) includes two first housing parts (20, 21) which receive the first magnetic element (24) between them, and/or the second connecting part (3) includes two second housing parts (30, 31) which receive the second magnetic element (34) between them.

13. The connecting device (1) according to any of the preceding claims, **characterized in that** the first connecting part (2) includes a first edge portion (200, 201) extending around the engagement opening (23) for connection with a first assembly (4) and/or the second connecting part (3) includes a second edge portion (300, 310) extending around the engaging portion (32) for connection with a second assembly (5).

14. The connecting device (1) according to any of the preceding claims, **characterized in that** the first connecting part (2) includes a first link portion (203) for connection with a first assembly (4), and the second connecting part (3) includes a second link portion (303) for connection with a second assembly (5), wherein the first link portion (203) and the second link portion (303) extend along a common plane (A) extending transversely to the engagement direction (E).

## Revendications

1. Dispositif de liaison (1) pour relier de manière amovible deux ensembles (4, 5), comprenant
une première partie de liaison (2), qui comprend une ouverture d'engagement (23) et un premier élément magnétique (24), et
une deuxième partie de liaison (3), qui comprend un tronçon d'engagement (32) et un deuxième élément magnétique (34), la première partie de liaison (2) et la deuxième partie de liaison (3) pouvant être reliées l'une à l'autre, en ce que le tronçon d'engagement (32) de la deuxième partie de liaison (3) peut être mise en prise avec l'ouverture d'engagement (23) de la première partie de liaison (2) dans une direction d'engagement (E), le premier élément magnétique (24) et le deuxième élément magnétique (34) coopérant par attraction magnétique lors de la liaison de la première partie de liaison (2) et de la deuxième partie de liaison (3),
l'ouverture d'engagement (23) et le tronçon d'engagement (32) présentant, dans un plan de section transversale défini par la direction d'engagement (E) et une direction transversale (Q) s'étendant transversalement à la direction d'engagement (E), une forme se rétrécissant dans la direction d'engagement (E), la première partie de liaison (2) présentant une première surface de contact (230) délimitant au moins par sections l'ouverture d'engagement (23) et la deuxième partie de liaison (3) présentant une deuxième surface de contact (320) délimitant au moins par sections le tronçon d'engagement (32),
la première surface de contact (230) et la deuxième surface de contact (320) se faisant face dans une position reliée dans laquelle le tronçon d'engagement (32) de la deuxième partie de liaison (3) est en prise avec l'ouverture d'engagement (23) de la première partie de liaison (2), la première surface de contact (230) s'étendant de manière circonférentielle autour de l'ouverture d'engagement (23) de la première partie de liaison (2) et la deuxième surface de contact (320) s'étendant de manière circonférentielle autour du tronçon d'engagement (32) de la deuxième partie de liaison (3),
**caractérisé en ce que** la première partie de liaison (2) présente un autre tronçon d'engagement (22) et/ou la deuxième partie de liaison (3) présente une autre ouverture d'engagement (33).

2. Dispositif de liaison (1) selon la revendication 1, **caractérisé en ce qu'**au moins une des surfaces de contact (230, 320) est incurvée ou s'étend obliquement par rapport à la direction d'engagement (E).

3. Dispositif de liaison (1) selon la revendication 1 ou 2, **caractérisé en ce que** la première surface de contact (230) et la deuxième surface de contact (320) sont respectivement incurvées ou s'étendent selon un angle oblique par rapport à la direction d'engagement (E).

4. Dispositif de liaison (1) selon l'une quelconque des revendications 1 à 3, **caractérisé en ce que** la première surface de contact (230) et la deuxième surface de contact (320) sont configurées pour converger l'une vers l'autre lors d'une action de force dirigée le long de la direction transversale (Q) entre la première partie de liaison (2) et la deuxième partie de liaison (3) et pour provoquer une déviation de force pour séparer la première partie de liaison (2) et la deuxième partie de liaison (3) l'une de l'autre.

5. Dispositif de liaison (1) selon l'une quelconque des revendications précédentes, **caractérisé en ce que** la première surface de contact (230) et la deuxième surface de contact (320) présentent la même courbure ou le même angle oblique par rapport à la direction d'engagement (E).

6. Dispositif de liaison (1) selon l'une quelconque des revendications précédentes, **caractérisé en ce que** la première surface de contact (230) et/ou la deuxième surface de contact (320) présentent au moins un élément de structure (221) avec au moins un tronçon de surface (222, 223) s'écartant d'une direction d'extension courbée ou oblique de la surface de contact (230, 320).

7. Dispositif de liaison (1) selon la revendication 6, **caractérisé en ce que** la première surface de contact (230) et/ou la deuxième surface de contact (320) présentent au moins un gradin.

8. Dispositif de liaison (1) selon l'une quelconque des revendications précédentes, **caractérisé en ce que** l'ouverture d'engagement (23) est délimitée par un fond (231), le premier élément magnétique (24) étant agencé dans la région du fond (231).

9. Dispositif de liaison (1) selon l'une quelconque des revendications précédentes, **caractérisé en ce qu'**à l'intérieur de l'ouverture d'engagement (23) est agencé un tronçon surélevé (232) orientée dans une direction opposée à la direction d'engagement (E), qui, lorsque le tronçon d'engagement (32) est en prise avec l'ouverture d'engagement (23), s'engage dans une ouverture de réception (324) sur le tronçon d'engagement (32).

10. Dispositif de liaison (1) selon l'une quelconque des revendications précédentes, **caractérisé en ce que** l'ouverture d'engagement (23) et/ou le tronçon d'engagement (320) est de forme ronde ou polygonale en section transversale par rapport à la direction d'engagement (E).

11. Dispositif de liaison (1) selon l'une quelconque des revendications précédentes, **caractérisé en ce que** la première partie de liaison (2) et la deuxième partie de liaison (3) sont formés comme des pièces identiques.

12. Dispositif de liaison (1) selon l'une quelconque des revendications précédentes, **caractérisé en ce que** la première partie de liaison (2) présente deux premières parties de boîtier (20, 21) qui reçoivent entre elles le premier élément magnétique (24), et/ou la deuxième partie de liaison (3) présente deux deuxièmes parties de boîtier (30, 31) qui reçoivent entre elles le deuxième élément magnétique (34).

13. Dispositif de liaison (1) selon l'une quelconque des revendications précédentes, **caractérisé en ce que** la première partie de liaison (2) présente un premier tronçon de bord (200, 210) s'étendant autour de l'ouverture d'engagement (23) pour la liaison avec un premier ensemble (4) et/ou la deuxième partie de liaison (3) présente un deuxième tronçon de bord (300, 310) s'étendant autour du tronçon d'engagement (32) pour la liaison avec un deuxième ensemble (5).

14. Dispositif de liaison (1) selon l'une quelconque des revendications précédentes, **caractérisé en ce que** la première partie de liaison (2) présente un premier tronçon de connexion (203) pour la liaison avec un premier ensemble (4) et la deuxième partie de liaison (3) présente un deuxième tronçon de connexion (303) pour la liaison avec un deuxième ensemble (5), le premier tronçon de connexion (203) et le deuxième tronçon de connexion (303) s'étendant le long d'un plan (A) commun, s'étendant transversalement à la direction d'engagement (E).
